# EUROPÄISCHE PATENTSCHRIFT

(11) **EP 4 059 793 B1**
(45) Veröffentlichungstag und Bekanntmachung des Hinweises auf die Patenterteilung: **06.09.2023**
(21) Anmeldenummer: 21163227.8
(22) Anmeldetag: 17.03.2021
(51) Int. Cl.: B60T 17/22, F16D 65/00, G01L 5/28

(54) **BREMSPRÜFEINRICHTUNG FÜR EIN FAHRZEUG MIT MINDESTENS EINER ANTREIBBAREN ACHSE UND VERFAHREN**
BRAKE TESTING DEVICE FOR A VEHICLE WITH AT LEAST ONE DRIVABLE AXLE AND METHOD
DISPOSITIF D'ESSAI DE FREIN POUR UN VÉHICULE POURVU D'AU MOINS UN ESSIEU POUVANT ÊTRE ENTRAÎNÉ ET PROCÉDÉ

(43) Veröffentlichungstag der Anmeldung: 21.09.2022
(73) Patentinhaber: Sherpa Autodiagnostik GmbH, 84539 Ampfing (DE)
(72) Erfinder: Lechner, Christian, 5122 Ach (AT)
(74) Vertreter: Manitz Finsterwald Patent- und Rechtsanwaltspartnerschaft mbB

(56) Entgegenhaltungen:
- EP-A1- 0 623 813
- EP-A2- 0 689 042
- WO-A1-2010/028361
- DE-A1- 3 841 248

## Beschreibung

Die vorliegende Erfindung betrifft eine Bremsprüfeinrichtung für ein Fahrzeug mit mindestens einer antreibbaren Achse mit einem Differential und mit einem Antrieb für das Differential, bei der der Antrieb während der Bremsprüfung drehfest haltbar ist, wobei das Rad oder die Räder auf der einen Seite der geprüften Achse von mindestens einer von einem Motor antreibbaren Einrichtung, vorzugsweise von einem Rollenpaar, in einer vorwärts gerichteten Drehrichtung antreibbar ist bzw. sind, während das andere Rad oder die Räder auf der anderen Seite der geprüften Achse von mindestens einer weiteren von einem Motor antreibbaren Einrichtung, vorzugsweise von einem Rollenpaar, in die andere Drehrichtung antreibbar ist. Ferner betrifft die vorliegende Anmeldung ein Verfahren zur Durchführung einer Bremsprüfung mit einer Bremsprüfeinrichtung der oben genannten Art.

Eine Bremsprüfeinrichtung der oben genannten Art ist in der EP-B-1 931 957 bzw. der EP-B-2 348 297 der vorliegenden Anmelderin beschrieben und beansprucht. EP 0 689 042A2 beschreibt eine weitere Testanordnung eines allgemeinen ABS-Modulators, schweigt aber über die besonderen Herausforderungen beim Bremstesten von Komplettallradfahrzeugen.

Im Grunde genommen dient die bekannte Bremsprüfeinrichtung dazu, zu ermitteln, ob es sich bei dem geprüften Fahrzeug um ein Fahrzeug mit zwei angetriebenen Achsen, wie z.B. einem Fahrzeug mit Allradantrieb handelt und falls ja, die Prüfung so durchzuführen, dass die gemessenen Bremswerte nicht durch unerwünschte Drehmomentübertragung verfälscht werden. Eine solche Verfälschung kann nämlich bei Fahrzeugen mit zwei oder mehr angetriebenen Achsen aus mehreren Gründen auftreten. Diese Gründe sind in den genannten Schriften der vorliegenden Anmelderin zusammen mit Angaben zu den relevanten Schriften zum Stand der Technik im Detail beschrieben. Die Angaben zum Stand der Technik in der EP-B-2 358 297 werden hiermit zum Inhalt der Beschreibungseinleitung der vorliegenden Anmeldung durch Bezugnahme gemacht und werden hier nicht unnötig wiederholt.

Es sind bereits viele Vorschläge gemacht worden, wie die Prüfung der Bremswirkung der einzelnen Bremsen eines Kraftfahrzeugs mit mindestens zwei angetriebenen Achsen, die miteinander über ein starres oder quasi-starres Antriebssystem gekoppelt sind, vorgenommen werden kann.

Zur Prüfung der Bremsen von Fahrzeugen mit nur einer angetriebenen Achse sind so genannte Rollenprüfstände seit langem bekannt, bei welchen zwei Rollenpaare vorgesehen sind, die von jeweiligen Antriebseinrichtungen gedreht werden. Bei der Durchführung der Prüfung wird das Fahrzeug, beispielsweise zuerst mit den Vorderrädern, auf die zwei Rollenpaare gefahren. Die jeweiligen Antriebseinrichtungen bzw. die Antriebsmotoren dieser Antriebseinrichtungen werden mit gleicher Geschwindigkeit gedreht, und der Fahrer drückt auf das Bremspedal des Kraftfahrzeugs. Die an den Rollen entstehenden Bremskräfte werden ermittelt, angezeigt und häufig auch gespeichert und ausgedruckt. Die Bremskraft, die an den einzelnen Rollenpaaren durch Betätigung der Fahrzeugbremsen entsteht, kann beispielsweise durch Messsensoren gemessen werden, die die Reaktionskraft der Antriebsmotoren ermitteln. Eine andere Möglichkeit besteht darin, die Motorenstromänderung der einzelnen Antriebsmotoren der Antriebseinrichtungen zu ermitteln. Für diese Variante müssen die Motoren angesteuert werden, um eine vorgegebene Geschwindigkeit trotz Betätigung der Bremse zu erzeugen.

Bekannt sind auch Brems- und Prüfstände, bei denen anstelle von Rollenpaaren umlaufende Bänder zum Antreiben der jeweiligen Räder verwendet werden. Ansonsten gilt das bisher Gesagte auch für solche Bremsprüfstände, die auch bei der vorliegenden Erfindung zur Anwendung gelangen können.

Bei Kraftfahrzeugen mit mindestens zwei angetriebenen Achsen, vor allem bei so genannten Allradfahrzeugen, können solche herkömmlichen Bremsprüfstände nicht verwendet werden. Bei solchen Kraftfahrzeugen mit mindestens zwei angetriebenen Achsen sind die Räder jeder angetriebenen Achse miteinander über ein Ausgleichsgetriebe und die angetriebenen Achsen untereinander mit einem starren oder quasi-starren Antriebssystem, wie beispielsweise ein Antriebssystem mit beschränktem Schlupf, gekoppelt.

Bei einem solchen Kraftfahrzeug entstehen mehrere Probleme, wenn man versuchen würde, die Bremsen mit einem herkömmlichen Prüfstand zu prüfen.

Wenn nur zwei Rollenpaare vorgesehen werden, werden aufgrund des starren oder quasi-starren Antriebssystems, beispielsweise beim Prüfen der Vorderräder, auch die Hinterräder mit angetrieben, wodurch sich das Fahrzeug aus dem Prüfstand zu schieben versucht. Man könnte zwar diese Auswirkung dadurch verhindern, dass man die Hinterräder aufbockt, dies würde aber trotzdem nicht zu einer zufriedenstellenden Bremsprüfung führen, da die Kopplung der zwei Achsen und daher der Räder miteinander dazu führt, dass bei einer defekten Bremse an einem Rad die Bremswirkung an den funktionierenden Bremsen auch auf das entsprechende Rad mit der defekten Bremse übertragen wird, so dass ein falsches Messergebnis angezeigt wird.

Um hier Abhilfe zu schaffen, wurde in der DE-OS 25188850 der Vorschlag gemacht, die Bremsprüfung für die linke und rechte Bremse einer der Achsen durchzuführen, während die Räder der anderen Achse stillstehen. Die linken und rechten Räder der geprüften Achse werden in unterschiedliche Drehrichtungen durch die jeweiligen Antriebseinrichtungen des Prüfstands gedreht, die jeweilige, getrennt ansteuerbare Antriebsmotoren aufweisen und ausgelegt sind, um die/das von den Rädern ausgeübte Bremskraft bzw. -moment bei einer erwünschten Geschwindigkeit zu ermitteln.

Diese Vorgehensweise bedeutet, dass bei gleicher Geschwindigkeit der sich in entgegengesetzten Richtungen drehenden Räder der geprüften Achse das starre oder quasi-starre Antriebssystem, das die Kopplung mit der zweiten angetriebenen Achse bzw. mit weiteren angetriebenen Achsen bewirkt, stillsteht, wodurch das Fahrzeug sich nicht mehr aus dem Prüfstand zu schieben versucht.

Unterschiedliche Drehgeschwindigkeiten der beiden Räder können trotz des Antreibens der Räderpaare der einzelnen Antriebseinrichtungen mit der gleichen erwünschten Geschwindigkeit auftreten, wenn der Reifen des einen Rades einen unterschiedlichen Radumfang zum anderen Rad aufweist. Solche unterschiedlichen Radumfänge können beispielsweise durch unterschiedliche Reifendrücke oder durch Abnützung oder gar durch falsche Reifenwahl entstehen.

Da die Antriebseinrichtungen des Prüfstands versuchen, die Räder mit der gleichen Umfangsgeschwindigkeit anzutreiben, führen die unterschiedlichen Radumfänge dazu, dass die Räder versuchen, sich mit unterschiedlichen Winkelgeschwindigkeiten zu drehen. Dies lässt das Antriebssystem, das die Kopplung mit der weiteren Achse bewirkt, deren Räder stillstehen, aber im Wesentlichen nicht zu. Es entsteht Schlupf und ein Kräfteausgleich zwischen den Rädern der geprüften Achse. Selbst wenn das Antriebssystem, das die beiden Achsen miteinander koppelt, einen gewissen Schlupf zulässt, beispielsweise aufgrund einer Viskosekupplung, erfolgt eine gewisse Kraftübertragung von einem Rad zum anderen. D.h. bei ungleicher Drehgeschwindigkeit der beiden Räder der geprüften Achse erfolgt eine Kraftübertragung von der einen Seite auf die andere Seite, wodurch ebenfalls die Bremswerte verfälscht werden. Dies kann so weit gehen, dass, wenn die eine Radbremse vollkommen defekt ist, die Bremswirkung der anderen Radbremse dennoch ausreicht, um ein positives Messergebnis für das Rad mit der defekten Bremse zu erzeugen.

Nach Prüfung der Räder der ersten Achse kann das Fahrzeug weitergefahren werden, so dass die Räder der zweiten Achse auf der Antriebseinrichtung des Prüfstands zu liegen kommen, und es kann die Prüfung für die zweite Achse wiederholt werden.

Da bei manchen Bremsenarten, z.B. Trommelbremsen, die entstehenden Bremskräfte bei Drehung des Rades entgegen der üblichen Fahrtrichtung im Vergleich zum Antrieb in die Fahrtrichtung zu unterschiedlichen Messergebnissen führen, werden auch häufig nach der Prüfung der Bremsen der einen Achse die Drehrichtungen der jeweiligen Antriebseinrichtungen umgeschaltet und die Bremsprüfung wiederholt. Nur die Bremswerte, die entsprechend der normalen Fahrtrichtung des Fahrzeugs gemessen werden, werden berücksichtigt. Zwar ist dies bei Scheibenbremsen nicht mehr unbedingt erforderlich, kann aber dennoch praktiziert werden.

Um das Problem der Verfälschung der Messwerte aufgrund von unterschiedlichen Radumfängen in den Griff zu bekommen, ist in der DE-PS 36 03 508 bzw. in der entsprechenden EP 0 236 715 B1 bereits vorgeschlagen worden, während des Bremsvorgangs die Drehgeschwindigkeit, d.h. die Winkelgeschwindigkeit der angetriebenen Räder, direkt zu messen und durch Steuerung der Antriebe der diese Räder antreibenden Rollensätze, d.h. durch Steuerung der Motoren der die Räder antreibenden Antriebseinrichtungen, gleich groß zu halten. Die Ermittlung der jeweiligen Drehgeschwindigkeiten der Räder der geprüften Achse erfolgt dort vorzugsweise durch Markierungen an den Rädern bzw. dort angebrachten Reflektoren. Eine ganze Umdrehung eines Rades ist somit erforderlich um die Drehgeschwindigkeit des Rades zu ermitteln. Diese Problematik macht es bei den Vorschlägen der EP 0 236 716 B1 notwendig mit überlagerten Steuerungen zu arbeiten, was eine wesentliche Komplikation und einen nicht unerheblichen Zeitverlust bei der Durchführung der Prüfung zum Ergebnis hat. Obwohl das in der EP 0 236 715 B1 beschriebene Verfahren theoretisch funktionieren könnte, war es damals nicht oder nur mit großem Aufwand möglich das Verfahren zu realisieren, da geeignete schnelle Sensoren nicht verfügbar waren. Auch bei diesem Stand der Technik werden die Räder der geprüften Achse bei der Bremsprüfung in unterschiedlichen Drehrichtungen gedreht.

Ein anderes System ist in der EP 1 283 415 A2 beschrieben. Bei dem dortigen Verfahren werden alle angetriebenen Räder jeweils auf ein Rollenpaar gesetzt und in die gleiche Drehrichtung angetrieben. Während des Bremsvorgangs sollten die Radumfangsgeschwindigkeiten und/oder die Winkelgeschwindigkeiten der Räder gemessen und durch eine Regelung der jeweiligen Rollenantriebe auf eine im Wesentlichen gleiche Geschwindigkeit geregelt werden. Abgesehen davon, dass es sich hier um ein unterschiedliches Messprinzip zu der vorliegenden Erfindung mit unterschiedlichen Drehrichtungen der Räder der geprüften Achse handelt, ist ein Bremsprüfstand mit vier Rollenpaaren relativ aufwändig, zumal der Abstand der Rollenpaare zur Anpassung an den unterschiedlichen Radständen verschiedener Fahrzeuge veränderbar sein muss. Auch hier gilt, dass es damals nicht oder nur mit großem Aufwand möglich gewesen war das Verfahren zu realisieren.

Zusammenfassend kann man daher folgendes festhalten:
Bei einer Bremsenprüfung mit mehrachsigen Fahrzeugen auf Rollen betriebenen Bremsenprüfständen ist es üblich, mit den Rädern einer Achse in die Prüfstandrollen zu fahren und die Bremswerte der beiden vorwärts drehenden Räder zu ermitteln.

Bei Fahrzeugen mit Mehrachsantrieb kann je nach Antriebssystem die Bremskraft der einzelnen Radbremsen über das Antriebsystem auf die anderen Radbremsen übertragen werden. Bei einer Bremsenprüfung der Radbremsen sollte jedoch die Bremswirkung der einzelnen Radbremsen und nicht der Bremskraftübertrag über das Antriebssystem ermittelt werden.

Die größten Probleme treten bei Allradfahrzeugen mit starrem oder quasi-starrem Antriebssystem auf.

Je nach Stärke der Allrad-Kraftübertragung wird das Fahrzeug durch die anderen Antriebsachsen aus den Prüfrollen geschoben, oder es ist durch die Einwirkung des Allradsystems ein erhöhter Rollwiderstand vorhanden. Dieser erhöhte Rollwiderstand kann die Messwerte der Bremsprüfung enorm verfälschen.

Damit derartige Fahrzeuge auf einem Rollen-Bremsenprüfstand geprüft werden können, ist es - wie oben erwähnt - seit langer Zeit üblich, die Räder der zu prüfenden Achse gegeneinander (eine Seite vorwärts und eine Seite rückwärts) zu drehen. Damit wird auf jeden Fall der Krafteinfluss von der Kardanwelle auf die zu prüfende Achse eliminiert oder verringert. Die Funktion der Rollen-Bremsenprüfstände ist so aufgebaut, dass die Elektromotoren mit einer fixierten Geschwindigkeit die Prüfrollen antreiben und diese wiederum die Räder des Fahrzeuges. Solange die beiden Räder einer Achse exakt denselben Radumfang haben, laufen die beiden Achswellen bei Drehrichtungsumkehr gegeneinander auch in derselben Geschwindigkeit. Sollte jedoch der Umfang der Räder unterschiedlich sein, wie zum Beispiel bei unterschiedlichem Reifenluftdruck oder unterschiedlicher Profilhöhe, verändert sich die Geschwindigkeit an den beiden Achswellen, da der Antrieb der Räder durch die Antriebsrollen des Bremsenprüfstandes erfolgt. In diesem Fall muss die Kardanwelle den Drehzahlunterschied ausgleichen.

Wenn diese jedoch durch den Allradantriebsstrang ganz oder teilweise blockiert ist, findet auf der zu prüfenden Achse ein Kraftübertag von einer Seite zur anderen statt. Dieser Kraftübertrag beeinflusst den Messwert der Bremsanzeige in erheblichem Maße.

Dies kann so weit führen, dass eine auf einer Seite unwirksame Bremse durch die Bremswirkung der anderen Seite den kompletten Bremskraftübertrag erhält und somit beide Seiten den gleichen Bremswert anzeigen, obwohl eine Bremse komplett unwirksam ist.

Wenn bei einer komplett blockierten Kardanwelle auf der zu prüfenden Achse eine Radbremse teilweise oder komplett ausgefallen ist, wird die Bremswirkung der funktionierenden Bremse über die Achswellen auf die andere Seite komplett übertragen. Damit dieser Kraftübertag vermieden wird, ist eine Regelung erforderlich, welche die beiden Achswellen auf die gleiche Prüfgeschwindigkeit bringt und während dem gesamten Bremsvorgang beibehält.

Die Aufgabe der vorliegenden Anmeldung liegt darin, mittels neuartiger Sensoreinrichtungen, die eine sehr genaue Erfassung der Drehgeschwindigkeiten der Räder erlaubt, eine feinfühlige Regelung der Drehgeschwindigkeit des sich rückwärts drehenden Rades kostengünstig und mit wenig Aufwand zu erreichen, wodurch eine Übertragung der Bremswirkung auf das eine vorwärts angetriebene Rad der geprüften Achse sowie auf das rückwärts angetriebene Rad der gleichen Achse und umgekehrt vermieden wird, wodurch eine Verfälschung der gemessenen Bremswirkung ausgeschlossen wird. Die Bezeichnung Rad, so wie hier angewandt, ist so auszulegen, dass es auch für ein Zwillingsradpaar gilt.

Zur Lösung dieser Aufgabe wird eine Bremsprüfeinrichtung der oben genannten Art vorgesehen, die sich dadurch auszeichnet, dass sie für beide Seiten der geprüften Achse eine jeweilige Sensoreinrichtung aufweist, die am jeweiligen Rad in einer beliebigen Orientierung anbringbar ist und welche Drehsignale des Rades bezogen auf eine zumindest im Wesentlichen horizontale Achse erzeugt, dass mindestens ein Signalprozessor vorgesehen ist, der aus den Drehsignalen der Sensoreinrichtungen Drehwinkelvektoren und aus den Drehwinkelvektoren einen Differenzwert bildet, und dass der Differenzwert oder eine diesem proportionalen Wert an einer Steuerung anlegbar ist, die die Drehgeschwindigkeit einer der vom Motor antreibbaren Einrichtungen derart ansteuert, dass der Drehwinkelunterschied der Räder auf den beiden Seiten der geprüften Achse während einer Bremsprüfung zumindest im Wesentlichen maximal dem Flankenspiel der geprüften Achse entspricht.

Diese Ausführung beruht auf der Erkenntnis, dass, solange die Drehgeschwindigkeit der beiden Räder zueinander nur um einen Betrag abweicht, der maximal dem Flankenspiel im Differential zuzüglich einem eventuell vorhandenen Spiel der mechanischen Auslegung der geprüften Achse entspricht, kein Bremsmoment von der einen Seite der Achse zur anderen Seite übertragen wird, und daher das Bremsmoment, das für das sich vorwärts drehende Rad ermittelt wird, nur von der diesem Rad zugeordneten Bremse stammen kann. Das entsprechende Bremsmoment wird von der Einrichtung ermittelt, die für die Drehbewegung des entsprechenden geprüften Rades verantwortlich ist. Normalerweise erfolgt die Messung dieses Bremsmoments durch das auf den Antriebsmotor der Rollen bzw. der Einrichtung einwirkende Drehmoment.

Es mag zunächst etwas merkwürdig erscheinen, dass man von einer Drehwinkeldifferenz bei zwei Rädern spricht, die in unterschiedlichen Drehrichtungen angetrieben werden. Die Auflösung dieses Rätsels liegt aber darin, dass, wenn man z.B. das sich vorwärts drehende Rad auf der linken Seite der Achse betrachtet, dieses sich entgegen dem Uhrzeigersinn dreht. Das Gleiche gilt aber auch für das Rad auf der rechten Seite, das rückwärts gedreht wird. Das bedeutet, dass die Drehgeschwindigkeitsvektoren der beiden Räder in die gleiche Richtung weisen, weshalb das Flankenspiel sich in der Drehwinkeldifferenz bemerkbar macht.

Es kommt eine Vielzahl von Möglichkeiten für die verwendeten Sensoreinrichtungen in Frage: Theoretisch könnte sogar eine Sensoreinrichtung, die einen Drehwinkel um eine einzelne Achse ermittelt, verwendet werden. Wenn nur ein Sensor die Winkelbestimmung so präzise erledigen kann, könnte es schon funktionieren. Solche Drehwinkelsensoren umfassen zum Beispiel ein Beschleunigungssensor, ein Gyro-Sensor, einen magnetischen differentiellen Hall-Sensor oder einen induktiven Winkelmesssensor. In der Praxis hat sich gezeigt, dass ein einzelner Beschleunigungssensor zu stark verrauschte Signale abgibt, als dass man aus diesen ein verlässliches Drehwinkelsignal bekommen kann. Jedoch ist nicht auszuschließen, dass verbesserte Sensoren künftig verfügbar werden könnten. Ein einzelner Gyro-Sensor ist nicht ausreichend lange stabil genug, dass dies über die gesamte Bremsprüfung genau genug ist. Auch hier können verbesserte Sensoren künftig verfügbar sein.

Es hat sich herausgestellt, dass zwei Sensoren (zum Beispiel ein Gyro-Sensor und ein Beschleunigungssensor) schon ausreichen würden um ein verlässliches Drehwinkelsignal zu erzeugen.

Im Grunde genommen könnte eine Kombination eines Gyro-Sensors mit mehreren Beschleunigungssensoren, eine Kombination von drei Beschleunigungssensoren in drei rechtwinkelig zueinander stehenden Koordinatenrichtungen und drei Gyro-Sensoren in drei ebenfalls rechtwinkelig zueinander stehenden Koordinatenrichtungen oder eine Kombination von drei Beschleunigungssensoren in drei rechtwinkelig zueinander stehenden Koordinatenrichtungen und drei Gyro-Sensoren in drei ebenfalls rechtwinkelig zueinander stehenden Koordinatenrichtungen sowie drei Magnetometersensoren, die Magnetometersignale in drei rechtwinkelig zueinander stehende Koordinaten erzeugen, in Frage kommen. Ein Beispiel für eine Kombination der zuletzt genannten Art ist ein Sensoreinrichtung BNO080 oder BNO085 der Firma Hillcrest Inc. Es ist aber nicht zwingend notwendig eine Kombination zu wählen, die sechs oder gar neun Signale kombiniert, um zu dem erwünschten Drehwinkelwert zu gelangen.

Die große Kunst den Drehwinkel zu errechnen, liegt in der Zusammenführung der Signale. Diese Berechnung ist Teil der integrierten Software der genannten Hillcrest Sensoren. Von Hillcrest wird, soweit bekannt, die konkrete Berechnung des Drehwinkels nicht nach Außen geteilt. Dennoch ist es einem versierten Programmierer und/oder Mathematiker zuzutrauen, in Eigenregie eine ähnlich gute resultierende Winkelveränderung zu berechnen. Die Winkelveränderung kann zum Beispiel über Euler-Winkel und Quaternionsberechnung durchgeführt werden.

Zusammenfassend kann man festhalten, dass die Sensoreinrichtungen jeweils als Halbleiterbauteile vorliegen und aus der Gruppe der folgenden Sensoreinrichtungen gewählt sind: Drehwinkelsensor zum Beispiel ein Beschleunigungssensor, ein Gyro-Sensor, ein magnetisch differentieller Hall-Sensor oder ein induktive Winkelmesssensor, eine Kombination eines Gyro-Sensors mit einem Beschleunigungssensors, eine Kombination mehrere Gyro-Sensoren mit einem oder mehreren Beschleunigungssensoren, eine Kombination eines Gyro-Sensors mit mehreren Beschleunigungssensoren, eine Kombination von drei Beschleunigungssensoren in drei rechtwinkelig zueinander stehenden Koordinatenrichtungen und drei Gyro-Sensoren in drei ebenfalls rechtwinkelig zueinander stehenden Koordinatenrichtungen und eine Kombination von drei Beschleunigungssensoren in drei rechtwinkelig zueinander stehenden Koordinatenrichtungen und drei Gyro-Sensoren in drei ebenfalls rechtwinkelig zueinander stehenden Koordinatenrichtungen sowie drei Magnetometersensoren, die Magnetometersignale in drei rechtwinkelig zueinander stehende Koordinaten erzeugen und dass mindestens ein Signalprozessor vorgesehen ist, der aus mindestens einigen der Signale das jeweilige Drehwinkelsignal bzw. ein kumuliertes Drehwinkelsignal für das entsprechende Rad um die zumindest im Wesentlichen horizontale Achse ermittelt.

Sensoreinrichtungen ähnlich den genannten Hillcrest-Sensoren sind für sich bekannt und werden häufig in Saugrobotern zum automatischen Staubsaugen und in Mährobotern zum automatischen Rasenmähen eingebaut, um die Steuerung der Fahrtrichtung der jeweiligen Vorrichtung zu ermöglichen. Dort drehen die entsprechenden Vorrichtungen um vertikale Achsen und bei solchen Vorrichtungen ist immer nur eine solche Sensoreinrichtung vorgesehen und es erfolgt weder eine kumulative Drehwinkelbildung noch eine Drehwinkeldifferenzbildung. Solche Sensoreinrichtungen sind im Handel preisgünstig erhältlich.

Besonders günstig ist es, wenn mindestens ein den Sensoreinrichtungen zugeordneter Prozessor vorgesehen ist, der die Drehwinkelvektoren des jeweiligen Rades, die von den Sensoreinrichtungen kommen, während einer Prüfung derart manipuliert, dass sie einen kumulativen Drehwinkelwert bilden, der der Differenzbildung zuführbar ist, anstelle Drehwinkel abwechselnd mit Plus- und Minuszeichen auszugeben.

Dies bedeutet, dass sich die Erfindung nicht in der Verwendung eines an sich bekannten Sensors erschöpft, sondern deren Ausgangssignale sich einer besonderen Auswertung unterworfen werden, um die Information zu erhalten, die erfindungsgemäß einsetzbar ist.

Besonders günstig ist es, wenn eine Steuereinrichtung vorgesehen ist, die programmiert ist, um mindestens folgende Funktionen am Anfang einer Bremsprüfung durchzuführen:
a) die vom Motor angetriebene Einrichtung für das Rad bzw. die Räder auf der einen Seite der Achse in einer Drehrichtung in Gang zu setzen und die Drehwinkelposition dieses Rades bzw. dieser Räder mit Hilfe der jeweiligen Sensoreinrichtung zu überwachen,
b) die Drehwinkelposition des Rades bzw. der Räder auf der anderen Seite der Achse, das bzw. die aufgrund des Differentials und des Feststehens der Kardanwelle in die entgegengesetzte Drehrichtung zu drehen versucht bzw. versuchen, mit Hilfe der auf dieser Seite der Achse vorgesehenen Sensoreinrichtung zu überprüfen, wobei nach einer Drehbewegung von wenigen Grad der Antrieb der geprüften Achse mit Sicherheit an einer Seite der Verzahnung anliegt, und sich der Bremswert des bzw. der in die entgegengesetzte Drehrichtung drehenden Rades bzw. Räder einen vorher festgelegten Schwellwert erreicht,
c) beim Erreichen dieses Schwellwertes die momentanen Winkelpositionen der Räder der geprüften Achse genullt werden,
d) das Rad bzw. die Räder auf einer Seite der Achse anschließend in die Gegenrichtung zu drehen, bis der Schwellwert erneut in die andere Richtung überschritten wird,
e) die Winkelpositionen der Räder auf beiden Seiten der Achse beim Erreichen des Schwellenwerts in die andere Richtung zu ermitteln,
f) die Winkeldifferenz zwischen dem im Schritt e) ermittelten Winkelpositionen ermittelt, die dem Zahnflankenspiel bzw. dem Achsspiel entspricht, und
g) die Drehgeschwindigkeit der Räder über die vom Motor angetriebenen Einrichtungen derart anzusteuern, dass die während der Bremsprüfung ermittelte Winkeldifferenz das Zahnflankenspiel nicht übersteigt. Vor der Messung wird das eine Rad vorzugsweise noch um die Hälfte des ermittelten Zahnflankenspiels zurückgedreht werden. Dann steht das Differenzial frei. So werden von Vornherein Kraftübertragungen minimiert.

Diese Ausführung hat den besonderen Vorteil, dass das Flankenspiel für jede geprüfte Achse nicht geschätzt oder innerhalb einer gewissen Toleranz als gegeben vorausgesetzt wird, was durchaus möglich wäre, sondern unter Anwendung der ohnehin vorhandenen Sensoren für jede geprüfte Achse separat gemessen wird. Dies führt nicht nur zu einer Erhöhung der Zuverlässigkeit des Ergebnisses der Bremsprüfung und zu einer Reduzierung der für die Prüfung erforderlichen Zeit, sondern liefert auch eine wichtige Aussage über den Zustand der Achse, bspw. ob das Differential zu viel Spiel aufweist und überholt werden sollte, oder ob eine Verschlechterung des Zustands der Achse von einer Prüfung zur nächsten eingetreten ist.

Besonders günstig ist es, wenn es sich bei jeder Sensoreinrichtung um einen Ein-Chip-Sensor mit neun Achsen und integriertem Prozessor handelt.

Solche Sensoreinrichtungen sind in Mobiltelefonen eingebaut und ermöglichen unter anderem die Realisierung einer Kompassfunktion. Zu diesem Zweck werden drei Gyroskop-Sensoren, drei Beschleunigungssensoren und drei Magnetfeldsensoren im Ein-Chip-Sensor eingebaut, weshalb der Sensor als neunachsig bezeichnet wird. Im vorliegenden Fall können bzw. sollen die Messsignale der drei Magnetfeldsensoren bei der Ermittlung des Drehwinkels außer Acht gelassen werden, da sie ohnehin durch die Magnetfelder der verwendeten elektrischen Antriebsmotoren und der im Fahrzeug und im Prüfstand verbauten elektrischen und magnetischen sowie eisenhaltigen Bauteile gestört werden.

Bevorzugt kommen Sensoreinrichtungen des Typs BNO080 oder BNO085 der Firma Hillcrest Laboratories Inc., 15245 Shady Grove Road, Suite 400, Rockville, MD 20850, USA, als Tochtergesellschaft von InterDigital Inc. zur Anwendung.

Diese Sensoreinrichtungen beinhalten auf dem gleichen Chip einen Prozessor, der bereits ausgelegt ist, um einen Drehwinkelvektor bezogen auf eine horizontale Drehachse zu liefern, und zwar unabhängig von der jeweiligen Raumorientierung der Sensoreinrichtung. Andere Halbleitersensoren von anderen Herstellern sind, soweit bekannt, nicht mit dieser Funktion ausgestattet. Zwar wäre es theoretisch möglich, aus den Ausgabesignalen der anderweitigen Sensoreinrichtungen mittels geeigneter Prozessoren auch ein Drehwinkelvektor um eine horizontale Drehachse zu gewinnen, die Mathematik ist aber äußerst komplex.

Jede Sensoreinrichtung ist mit einer Einrichtung zu deren Anbringung an einem Rad oder einem Radbolzen oder an einer Radmutter oder einer Radnabe oder in einer Radöffnung versehen. Hiermit kann jede Sensoreinrichtung montiert und demontiert werden und ist somit quasi unbegrenzt wiederverwendbar. Die genaue Position oder Orientierung der Sensoreinrichtung am jeweiligen Rad ist unkritisch, zumal eine Funkübertragung ohne weiteres vorgesehen werden kann.

Besonders günstig ist es, wenn die Anbringungseinrichtung einen Magneten oder Elektromagneten umfasst. Hierdurch kann die Sensoreinrichtung vom Betreiber des Prüfstandes für die Prüfung schnell angebracht und nach der Prüfung wieder schnell entfernt werden.

Es gibt eine Vielzahl von alternativen Anbringungsmöglichkeiten. Z.B. kann die Anbringungseinrichtung ausgelegt werden, um mittels Saugkraft, Klebkraft oder mit einem mechanischen Verschluss, bspw. mit einem elastischen Riemen mit Schnalle oder Klettverschluss oder mit einem wiederverwendbaren Kabelbinder, am Rad angebracht zu werden.

Obwohl die Bremsprüfeinrichtung grundsätzlich zur Prüfung der Bremsen von Allradfahrzeugen verwendet werden kann, wird sie in erster Linie für die Prüfung von Fahrzeugen mit zwei hintereinander angeordneten, angetriebenen Achsen verwendet, bei denen die Bremsen der Räder der einen Achse getrennt von den Bremsen der Räder der anderen Achse prüfbar sind, und die eine Achse direkt oder indirekt von einem Fahrzeugmotor antreibbar ist und einen Abtrieb aufweist, der mit einem Differential der anderen Achse direkt oder indirekt gekoppelt ist.

Die Bremsprüfung bei Fahrzeugen dieser Bauart hat sich bislang als schwierig bzw. aufwendig erwiesen. Beispielsweise ist es bekannt, die Kardanwelle zur nächsten Achse auszubauen um diesen Effekt zu eliminieren. Typische Beispiele für solche Fahrzeuge sind Militärfahrzeuge, Baustellen- und Bergwerksfahrzeuge.

Ein bevorzugtes Verfahren zur Prüfung der Radbremsen eines Fahrzeugs mit mindestens einer antreibbaren Achse mit einem Differential und mit einem Antrieb für das Differential, bei der der Antrieb während der Bremsprüfung drehfest gehalten wird, ist im Anspruch 12 angegeben. Weitere bevorzugte Varianten des erfindungsgemäßen Verfahrens sind in den weiteren Ansprüchen angegeben.

Die Erfindung wird nachfolgend anhand von Ausführungsbeispielen unter Bezugnahme auf die beigefügten Zeichnungen näher erläutert, in denen zeigen:
- Fig. 1: eine perspektivische Darstellung eines Allradfahrzeugs, dessen Bremsen mittels der vorliegenden Erfindung geprüft werden können,
- Fig. 2: eine Darstellung eines Rollenpaares mit zugeordnetem Elektromotor zum Antreiben des Rollenpaares,
- Fig. 3: eine Querschnittszeichnung entsprechend dem Pfeil III-III der Fig. 2, jedoch in einem größeren Maßstab, um die Arbeitsweise des Rollenprüfstands näher zu erläutern,
- Fig. 4: eine perspektivische Darstellung der zwei angetriebenen Achsen eines schweren Fahrzeugs wie ein Militärfahrzeug und
- Fig. 5: eine schematische Darstellung eines Schaltkreises zur Ermittlung der Bremswirkung bei einem geeigneten Fahrzeug mit zwei angetriebenen Achsen.

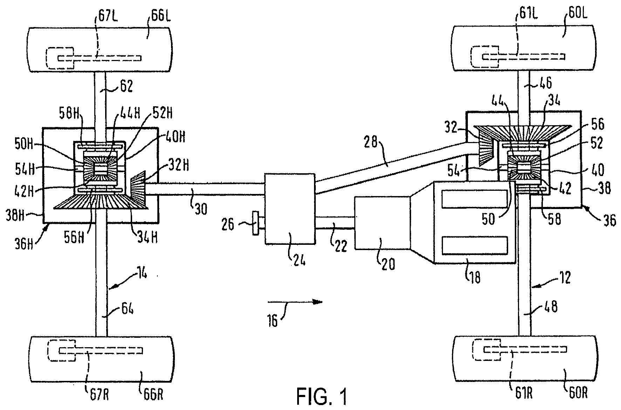

Bezug nehmend auf die Fig. 1 werden zur Erläuterung einer möglichen Auslegung eines Kraftfahrzeugs mit Allradantrieb die wesentlichen Komponenten dieses Allradsystems gezeigt. Danach verfügt das Fahrzeug 10 über eine vordere Achse 12 und eine hintere Achse 14, wobei der Pfeil 16 die normale Fahrtrichtung angibt. Der Motor 18 des Fahrzeugs ist mit einem Getriebe 20 versehen, dessen Ausgangswelle, die eine übliche Kardanwelle 22 sein kann, die Eingangswelle eines so genannten Verteilergetriebes 24 ist. Das Verteilergetriebe weist drei Ausgangswellen 26, 28 und 30 auf.

Die Ausgangswelle 26, die nur wahlweise vorhanden ist, kann verwendet werden, um Hilfseinrichtungen des Fahrzeugs anzutreiben, beispielsweise eine oder mehrere Pumpen, um Drucköl für hydraulisch betätigte Sperrkupplungen zu betätigen oder eine wahlweise vorhandene Winde bei einem Geländefahrzeug.

Die Ausgangswelle 28, die als Kardanwelle vorgesehen ist, treibt das Antriebsritzel 32 und dieses das Tellerrad 34 des Ausgleichsgetriebes 36 der Vorderachse 12 an. Das Ausgleichsgetriebe 36 weist ein Gehäuse 38 auf, in dem das Antriebsritzel 32, das Tellerrad 34 und die üblichen Teile eines Ausgleichsgetriebes untergebracht sind, das hier mit einer selbsttätigen Ausgleichssperre versehen ist. Demnach besteht das Innere des Ausgleichsgetriebes aus einem Ausgleichsgehäuse 40, das vom Tellerrad 34 angetrieben wird und selbst über entsprechende Lager (nicht gezeigt) im Gehäuse 38 drehbar gelagert ist. Innerhalb des Ausgleichsgehäuses befinden sich Antriebskegelräder 42 und 44, die mit jeweiligen Achswellen 46 und 48 der Vorderachse 12 drehfest verbunden sind, sowie so genannte Ausgleichsräder 50 und 52, wobei auch weitere Ausgleichsräder üblicherweise vorgesehen werden, jedoch in der Zeichnung nicht ersichtlich sind. Die Ausgleichsräder sind an Ausgleichsbolzen 54 drehbar gelagert.

Im Ausgleichsgehäuse links und rechts der Antriebskegelräder befinden sich Lamellenkupplungen 56, 58, die unter der Einwirkung der Ausgleichsbolzen auf Druckringe (nicht gezeigt) kraftschlüssig in Eingriff gelangen und verhindern, dass die Achswellen 46 und 48 mit deutlich unterschiedlichen Drehzahlen angetrieben werden. Solche Ausgleichsgetriebe mit selbsttätigen Ausgleichssperren sind in vielen Formen und Variationen in der Fachwelt bekannt und müssen hier nicht extra beschrieben werden. Die Achswellen 46 und 48 treiben jeweilige linke und rechte Räder 60L und 60R an sowie die Bremsscheiben 61L und 61R, die innerhalb dieser Räder angeordnet und mit diesen drehfest verbunden sind. D.h. die Bremsscheiben mit den entsprechenden Bremszylindern bilden jeweilige Radbremsen.

Die dritte Ausgangswelle 30 des Verteilergetriebes 24 ist ebenfalls üblicherweise als Kardanwelle ausgeführt und sorgt über das Antriebsritzel 32H und das weitere Ausgangsgetriebe 36H für den Antrieb der hinteren Achse des Fahrzeugs.

Das Ausgleichsgetriebe 36H ist vom Prinzip her identisch mit dem Ausgleichsgetriebe 36, und die entsprechenden Bauteile sind mit entsprechenden Nummern versehen, jedoch nur mit dem Zusatz H, um eine klare Unterscheidung herbeizuführen. Es versteht sich, dass die Funktionsweise des Ausgleichsgetriebes 36H identisch zum Ausgleichsgetriebe 36 ist. Zu der Hinterachse gehören zwei Achswellen 62 und 64, die jeweilige linke und rechte Hinterräder 66L und 66R sowie die entsprechenden Bremsscheiben 67L und 67R antreiben. Die Halbwelle 64 wird vom Antriebskegelrad 42H und die Halbwelle 62 vom Antriebskegelrad 44H angetrieben.

Es soll an dieser Stelle darauf hingewiesen werden, dass die Darstellung gemäß Fig. 1 nur eine von vielen verschiedenen Auslegungen von Kraftfahrzeugen mit mindestens zwei angetriebenen Achsen darstellt. Die vorliegende Erfindung kann im Prinzip bei allen solchen Fahrzeugen verwendet werden, vorausgesetzt, dass keine Kupplung vorgesehen ist, die bei niedrigen Geschwindigkeiten Schlupf zwischen der Vorderachse und der Hinterachse zulässt bzw. eine zuschaltbare Sperre vorgesehen ist, die einen solchen Schlupf unterbindet.

Somit ist wesentlich, dass zwischen den angetriebenen Achsen stets ein starres oder quasi-starres Antriebssystem vorliegt. Beim vorliegenden Beispiel gemäß Fig. 1 wird dieses Antriebssystem durch das Verteilergetriebe 24 sowie die beiden Antriebswellen 28 und 30 gebildet. Selbst wenn, wie ebenfalls bekannt ist, eine Viskosekupplung oder eine Kupplung mit beschränktem Schlupf oder ein Ausgleichsgetriebe in diesem Antriebssystem vorgesehen ist, gilt das System insgesamt als quasi-starres Antriebssystem.

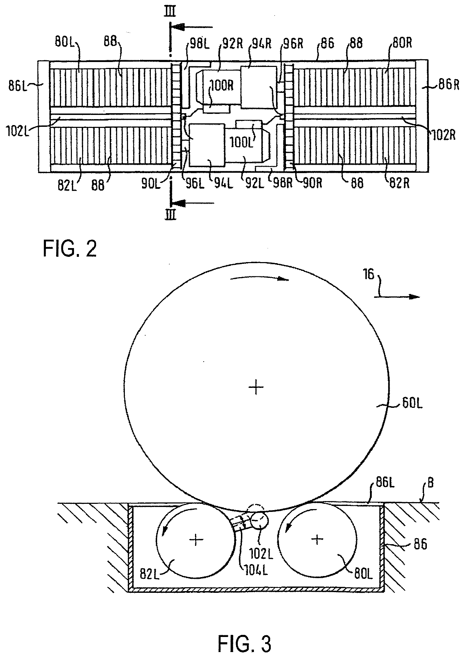

Ein Beispiel eines Prüfstandes mit zwei Rollenpaaren wird nunmehr anhand der Fig. 2 und 3 beschrieben.

Im Prüfstand gemäß Fig. 2 sind zwei Rollenpaare 80R und 82R auf der rechten Seite und 80L und 82L auf der linken Seite vorgesehen, die voneinander vollkommen unabhängig sind. Die beiden Rollenpaare sind in einem quaderförmigen Kasten bzw. Gehäuse 86 untergebracht, wobei das Gehäuse 86 an seiner oberen Seite im Bereich der Profilwalzenpaare 80R, 82R bzw. 80L, 82L offen ist, jedoch im mittleren Bereich zwischen diesen Rollenpaaren normalerweise mit einem Deckel verschlossen ist (der hier der Darstellung halber weggelassen ist). Auch sind häufig Deckel vorgesehen, um die Rollenpaare 80R, 82R bzw. 80L, 82L abzudecken, wenn diese nicht für Bremsprüfungen benötigt werden.

An ihrem rechten Ende sind die Rollen 80R und 82R in Lagern abgestützt, die im entsprechenden rechten Ende des Gehäuses 86 untergebracht sind.

Auf der linken Seite sind die entsprechenden Rollen 80L und 82L ebenfalls in Lagern drehbar gelagert. Die Lager auf der rechten Seite des Rollenpaars 80R, 82R und auf der linken Seite der Rollen 80L, 82L sind in der Zeichnung gemäß Fig. 2 nicht ersichtlich, da sie von dem Gehäuseteil 86R und 86L abgedeckt sind.

Wie aus Fig. 3 ersichtlich, sind die Oberflächen der Rollenpaare, hier am Beispiel der Rollenpaare 80L und 82L gezeigt, mit ihren oberen Bereichen flächenbündig mit den Gehäuseteilen 86L bzw. 86R (in Fig. 3 nicht gezeigt) und ebenfalls flächenbündig mit dem Werkstattboden B, in den das Gehäuse 86 eingelassen ist.

Die Oberflächen der Rollenpaare 80R, 82R bzw. 80L und 82L sind mit Aufrauhungen, beispielsweise in Form von unregelmäßigen Schweißraupen 88 versehen, um die erforderliche Griffigkeit zwischen den Rollen und dem zu prüfenden Fahrzeugrad sicherzustellen, das schematisch in Fig. 3 mit 60L angedeutet ist.

Die Rollen 80R, 82R bzw. 80L und 82L der beiden Rollenpaare sind an ihren Enden, die benachbart zur Mitte des Gehäuses 86 liegen, jeweils mit einer umlaufenden Kette 90R bzw. 90L drehfest miteinander verbunden. Das rechte Rollenpaar 80R, 82R wird von einem Elektromotor 92L mit Getriebe 94L, d.h. einem Getriebemotor, angetrieben, wobei die Antriebswelle 96L, die die Rolle 80R direkt antreibt, auch für die Lagerung der linken Seite der Rolle 80R sorgt, d.h. die Lagerung der Welle 96L im Getriebe 94L sorgt für die notwendige Lagerung des linken Endes der Rolle 80R. Für das linke Ende der Rolle 82R wird ein getrenntes Lager 98R vorgesehen, das am Gehäuse 86 bzw. am Gehäuserahmen abgestützt ist. Es handelt sich bei dem Elektromotor 92L um einen Elektromotor mit variabler Antriebsgeschwindigkeit, die von einem Elektronikbauteil 100R gesteuert wird. Die Antriebsanordnung für das linke Rollenpaar 80L, 82L ist identisch zum Antriebssystem für das rechte Rollenpaar 80R, 82R aufgebaut, weshalb die entsprechenden Teile mit den gleichen Bezugszeichen versehen werden, jedoch mit dem Zusatz L anstatt R. Es versteht sich, dass die bisherige Beschreibung auch für diese Teile gilt.

Zwischen jedem Rollenpaar 80R, 82R und 80L, 82L befindet sich eine Steuerstange 102R bzw. 102L, die dafür sorgt, dass die Antriebsmotoren 92R bzw. 92L erst dann Strom erhalten und die Rollen in Drehung versetzen können, wenn ein Rad wie 60L in Fig. 3 auf die beiden Rollen gefahren ist und die jeweilige Steuerstange 102L in Fig. 3, die über einen schwenkbaren Hebel 104L montiert ist, von der oberen Position in gebrochenen Linien dargestellt, in die nach unten gedrückte Position, die in durchgehenden Linien gezeichnet ist, gedrückt wird. In dieser niedergedrückten Stellung betätigt die jeweilige Steuerstange, in diesem Fall 102L, einen Endschalter (nicht gezeigt), der ein entsprechendes Signal an die jeweilige Steuerung 100R bzw. 100L gibt.

Die Drehrichtungen der Rollen 80L bzw. 82L, die erforderlich sind, um das linke Vorderrad 60L in Fahrtrichtung zu drehen, sind durch jeweilige Pfeile dargestellt.

Die Bauteile 80R, 82R, 92R, 94R, 96R, 102R, 104R 100R bilden eine erste Antriebseinrichtung, die beispielsweise dem rechten Vorderrad 60R zugeordnet werden kann. In der gleichen Weise bilden die Bauteile 80L, 82L, 92L, 94L, 96L, 102L, 104L, 100L eine Antriebseinrichtung für beispielsweise das linke Vorderrad 60L.

Jede Antriebseinrichtung ist ausgelegt, damit der entsprechende Motor 92R bzw. 92L das entsprechende Rollenpaar 80R, 82R bzw. 80L, 82L mit einer erwünschten Geschwindigkeit antreiben kann, und diese erwünschte Geschwindigkeit kann über eine externe Steuerleitung, beispielsweise von einer übergeordneten Computersteuerung, vorgegeben werden. In üblicher Weise liegt diese erwünschte Geschwindigkeit im Bereich zwischen 2 und 7 m/s Oberflächengeschwindigkeit der entsprechenden Rollen.

Dies ist auch der Zustand bei einem herkömmlichen Bremsenprüfstand, beispielsweise beim Bremsenprüfstand BPS Kompakt, 0-13.0 der vorliegenden Anmelderin.

Zu diesen Antriebseinrichtungen gehören auch die Kraftaufnehmer, die die Reaktionskraft zwischen dem Motor 92R bzw. 92L und dem Gehäuse 86 des Bremsenprüfstands aufnehmen. Die Höhe dieser Reaktionskraft hängt vom Rollwiderstand der jeweiligen Räder sowie der/dem durch die Bremsen auf die jeweiligen Räder ausgeübten Bremskraft bzw. -moment ab. Da der Eingangswert bei gelöster Bremse und dem entsprechenden Wert bei betätigter Bremse ermittelt wird, kann der Anteil der Reaktionskraft, die auf die Wirkung der Bremsen zurückzuführen ist, durch den Unterschied der beiden Werte ermittelt werden. So funktioniert auch der Bremsenprüfstand, wenn die Prüfung an einem herkömmlichen Fahrzeug durchgeführt wird, das mit nur einer angetriebenen Achse versehen ist, d.h. ohne Allradantrieb. In diesem Falle ist aber die erwünschte Geschwindigkeit für beide Räder gleich. Bei einem solchen Fahrzeug hat ein etwaiges Ausgleichsgetriebe mit Sperrwirkung, das sich in der Achse zwischen den beiden Rädern befindet, bei Betätigung der Bremsen keine Auswirkung auf die gemessenen Bremskräfte. Selbst wenn die Räder aus irgendeinem Grund unterschiedliche Rollumfänge haben sollten, reicht dies normalerweise nicht aus, um eine so unterschiedliche Drehgeschwindigkeit der linken und rechten Räder herbeizuführen, dass die Sperrkupplung eingreift.

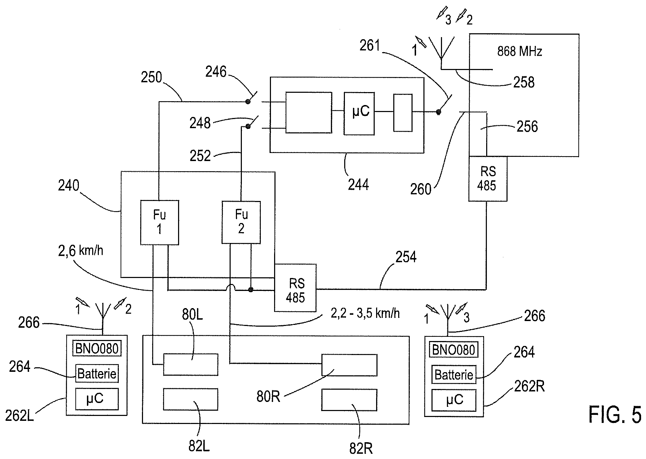

Bei einem Fahrzeug mit mehreren angetriebenen Achsen, die miteinander über ein Antriebssystem starr oder quasi-starr gekoppelt sind, für dessen Prüfung die vorliegende Erfindung vorgesehen ist, wird eine besondere Steuerung vorgesehen, die später anhand der Fig. 5 näher beschrieben wird.

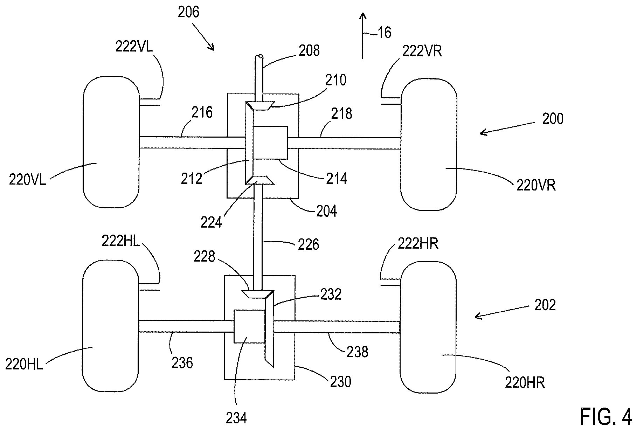

Die Fig. 4 zeigt ein anderes Beispiel für ein Fahrzeug mit mehreren angetriebenen Achsen, die miteinander über ein Antriebssystem starr gekoppelt sind und zwar in Form zweier Achsen eines Baustellen-, Bergwerks- oder Militärfahrzeug dessen Prüfung hier im Vordergrund steht.

Bezugnehmend auf die Fig. 4 wird eine schematische Darstellung einer Bremsprüfeinrichtung für ein Fahrzeug mit zwei antreibbaren Achsen 200, 202, nämlich eine vordere Hinterachse 200 und eine hintere Hinterachse 202 eines schweren Fahrzeugs wie zum Beispiel ein Militärfahrzeug, ein Baustellenfahrzeug oder ein Bergwerksfahrzeug, gezeigt. Das Fahrzeug könnte auch eine dritte Hinterachse oder weitere Hinterachse aufweisen. Das Fahrzeug weist üblicherweise auch eine Vorderachse oder mehrere Vorderachsen auf, und es kann sich dabei um angetriebene Achsen handeln.

In diesem Beispiel ist die vordere Hinterachse 200 mit einem Differential 204 und mit einem Antrieb 206 für das Differential 204 ausgestattet, bei der der Antrieb 206 während der Bremsprüfung drehfest haltbar ist. In diesem Beispiel umfasst der Antrieb 206 eine Kardanwelle 208, der mit dem Antriebsritzel 210 des Differentials 204 gekoppelt ist. Es wird angenommen, dass die Kardanwelle 208 während der Bremsprüfung stillsteht und zwar zunächst, entweder weil der Antrieb für die Kardanwelle ausgeschaltet oder blockiert ist, bspw. weil der Antriebsmotor ausgeschaltet ist, oder weil eine etwaige mit der Kardanwelle gekoppelte Achse, zum Beispiel eine Vorderachse des Fahrzeugs Bodenkontakt aufweist, d.h. das entsprechende nicht gezeigte Fahrzeug sich im Stillstand befindet. Das Antriebsritzel 210 kämmt mit dem Tellerrad 212 des Differentials 204, das mit dem Ausgleichsgetriebe 214 gekoppelt ist. Die Auslegung dieses Ausgleichsgetriebe 214 entspricht im Wesentlichen dem der Hinterachse 14 der Fig. 1 und wird nicht extra beschrieben. Es genügt zu sagen, dass das Ausgleichsgetriebe 214 die Halbwellen 216 und 218 antreibt, die wiederum die Räder 220VL und 220VR antreiben.

Das Bezugszeichen 220VL deutet auf das linke Rad der vorderen Hinterachse 200, während die Bezugszeichen 220VR auf das rechte Vorderrad der vorderen Hinterachse 200hinweist. Das Bezugszeichen 220HL. deutet auf das linke Hinterrad der hinteren Hinterachse 202, während das Bezugszeichen 220HR auf das rechte Hinterrad der hinteren Hinterachse 204 hinweist. Die Räder 220VL, 220VR, 220HL und 220HR sind hier als Einzelräder dargestellt, sie können aber jeweils auch als Zwillingsräder ausgeführt werden. Jedes Rad 220VL, 220VR, 220HL und 220HR ist mit einer geeigneten Bremseinrichtung (nicht gezeigt) versehen, die üblicherweise als Trommelbremse oder Scheibenbremse ausgeführt ist. Die Bezugszeichen 222VL, 222VR,222HL und 222HR deuten auf die Betätigungseinrichtungen für die einzelnen Bremsen der Bremseinrichtungen der einzelnen Räder 220VL, 220VR, 220HL bzw. 220HR. Es kann sich bei den Betätigungseinrichtungen 222VL, 222VR,222HL und 222HR um Stangen handeln, die beispielsweise von einer pneumatischen oder hydraulischen Bremsservo (getrennt für die vordere Hinterachse 200 und die hintere Hinterachse 204) angesteuert werden, und welche mechanische Bremseinrichtungen mechanisch betätigen, oder es kann sich um pneumatische oder hydraulische Bremsleitungen handeln, die entsprechende Bremszylinder der Bremseinrichtungen betätigen.

Bei dem Fahrzeug der Fig. 4 kämmt das Tellerrad 212 mit einem zweiten Ritzel 224, das über ein Kardangelenk mit Verschiebemuffe (beides nicht gezeigt) eine Abtriebswelle 226 antreibt, die über ein weiteres Kardangelenk(auch nicht gezeigt) ein Antriebritzel 228 eines Differentials 230 der hinteren Hinterachse 202 antreibt. Das Antriebsritzel 228 kämmt mit dem Tellerrad 232 der hinteren Hinterachse, das das Ausgleichsgetriebe 234 antreibt. Da das zweite Ritzel 224 des Differentials 204 auf der anderen Seite des Tellerrads vom Ritzel 210 angeordnet ist, dreht sich die Abtriebswelle 226 im umgekehrten Sinn zur Kardanwelle 208, weshalb das Tellerrad 232 des zweiten Differentials 230 auf der anderen Seite des in diesem Differential 230 vorgesehenen Ausgleichsgetriebes 234 angeordnet ist, damit im Fahrbetrieb des Fahrzeugs alle Räder in die gleiche Drehrichtung gedreht werden. Die Bezugszeichen 236 und 238 deuten auf die Halbwellen, die - wie üblich - das Ausgleichsgetriebe 234 mit den Rädern 220HL und 220HR der hinteren Hinterachse 202 koppeln.

Bei der Bremsprüfung kommt auch hier ein Rollenprüfstand zum Einsatz, wie oben im Zusammenhang mit den Fig. 2 und 3 im Detail beschrieben ist, selbst wenn die konkrete Ausführung deshalb etwas robuster und größer ausgeführt wird, da es sich hier um die Prüfung von LKW-Bremsen handelt. Der Grund hierfür liegt darin, dass die Belastung und die physikalischen Abmessungen von LKW's sich deutlich von denen von PKW's unterscheiden, und die Unterschiede müssen berücksichtigt werden.

Es werden als erstes die Bremsen der Vorderachse (nicht gezeigt) des Fahrzeugs geprüft Zu diesem Zweck werden die Räder der Vorderachse auf die Rollenpaare 80L, 82L und 80R, 82R entsprechend der Fig. 3 gefahren und sofern diese Räder nicht angetrieben werden, die Bremsprüfung genauso vorgenommen wie für ein normales Fahrzeug ohne Vorderradantrieb.

Sollten die Räder der Vorderachse angetriebene Räder sein, werden sie vom Motor des Fahrzeugs über ein Differential und ggf. ein Verteilergetriebe angetrieben. Wenn sichergestellt wird, dass die Eingangswelle des Differentials der Vorderachse entweder von einer Differentialsperre oder anderweitig, zum Beispiel dadurch, dass die Räder der beiden Hinterachsen 200, 202 durch Bodenkontakt stillstehen, so können die Bremsen der Vorderachse so geprüft werden wie die Bremsen der beiden Hinterachsen 200, 202, die nachfolgend näher erläutert wird.

Nach der Prüfung der Vorderachse wird das Fahrzeug vorgefahren bis die Räder 220VL und 220VR der vorderen Hinterachse 200 auf die Rollenpaare 80L, 82L und 80R, 82R auf den Rollenpaaren entsprechend der Fig. 3 stehen. Die Räder 220HI und 220HR stehen dann auf dem Boden, wodurch die Abtriebswelle 226 und das Tellerrad 212 und das Antriebsritzel 210 bis auf das Flankenspiel still stehen. Die Bremsen der vorderen Hinterachse 202 können nunmehr getestet werden, wie nachfolgend beschrieben wird.

Wenn diese Prüfung abgeschlossen ist, kann das Fahrzeug weiter vorgefahren werden, so, dass die Räder 220HL und 220HR der hinteren Hinterachse 202 auf den Rollenpaaren 80L, 82L und 80R 82R entsprechend der Fig. 3 stehen. Die Räder 220VI und 220VR der vorderen Hinterachse 200 stehen dann auf dem Boden, wodurch die Abtriebswelle 226 ebenfalls still steht. Die Bremsen der hinteren Hinterachse 202 können nunmehr getestet werden, wie nachfolgend beschrieben wird.

Bei allen Bremsprüfungen, d.h. bei der Bremsprüfung der Räder der Vorderachse, wenn es sich um eine angetriebene Achse handelt, oder bei der Prüfung der vorderen Hinterachse 200 oder der hinteren Hinterachse 202 wird so vorgegangen, dass das eine Rad, zum Beispiel 220VL oder 220HL mit einer gewissen vorgegebenen Geschwindigkeit von dem E-Motor 92L und dem Rollenpaar 80L, 82L bzw. 80R, 82R bei einer Umfangsgeschwindigkeit von zum Beispiel 2,6 km/h angetrieben werden und die Räder 220VR oder 220HR in der entgegengesetzten Richtung vom E-Motor 92R und dem Rollenpaar 80R und 82R bei einer Geschwindigkeit angetrieben werden, die sicherstellt, dass die Winkelpositionen der Räder 220VL und 220VR bzw. 220HL und 220HR stets im Bereich des Zahnflankenspiels bzw. des Achsspiels zueinander stehen. Dies bedeutet, dass das entsprechende Ausgleichsgetriebe 214 bzw. 234 kein Drehmoment von links nach rechts oder von rechts nach links überträgt und die Antriebswelle 208 bzw. die Abtriebswelle 226 weiterhin still stehen, d.h. sich nicht drehen.

Die Bremswerte für das linke Rad 220VL oder 220HL oder für das rechte Rad 220VR bzw. 220HR werden somit nicht verfälscht. Wenn es sich um Trommelbremsen handelt, ist die Bremswirkung in der vorwärts gerichteten Richtung aufgrund der Servowirkung der Bremsschuhe meistens deutlich höher als in der entgegengesetzten Richtung (rückwärts), weshalb nach der Prüfung der Bremsen der Räder 220VL oder 220HL, die Prüfung der Bremsen der Räder 220VR bzw. 220HR getrennt erfolgt. Dies wird dadurch durchgeführt, dass das Rad 220VR bzw. 220HR vom Rollenpaar 80R, 82R nunmehr in der Vorwärtsrichtung gedreht wird, während das Rad 220VI bzw. 220HL durch das Rollenpaar 80L,82L in die entgegengesetzte Richtung gedreht wird und zwar so, dass die Winkelpositionen der Räder 220VL und 220VR bzw. 220HL und 220HR stets im Bereich des Zahnflankenspiels bzw. des Achsspiels zueinander stehen. Dies bedeutet, dass das entsprechende Ausgleichsgetriebe 214 bzw. 234 kein Drehmoment vom links nach rechts oder von rechts nach links überträgt und die Antriebswelle 208 bzw. die Abtriebswelle 226 weiterhin still stehen, d.h. sich nicht drehen.

Anstelle die Bremswerte von Trommelbremsen nur in die vorwärts gerichtete Drehrichtung zu messen, können die Bremswerte sowohl in der Vorwärtsrichtung als auch rückwärts gemessen und aus den beiden Messwerten ein Mittelwert gebildet werden. Üblicherweise wird bei so einem System kein Mittelwert herangezogen, sondern die Maximalwerte links und rechts bei identischem Bremsdruck verwendet. Um einen identischen Bremsdruck herzustellen wird entweder der Einsteuerdruck (auch Pm genannt) gemessen oder ein Pedalkraftsensor auf dem Bremspedal montiert.

Bei Scheibenbremsen ist die Drehrichtung unkritisch. Somit können die Bremswerte sowohl während der Drehung in der Vorwärtsrichtung als auch während der Drehung in der Rückwärtsrichtung gemessen werden. Bei allen Bremsprüfungen werden die Bremsen auf der linken und rechten Seite der geprüften Achse gleichzeitig betätigt und die Bremswerte von den einzelnen Rollenpaaren 80L,82L bzw. 80R,82R in an sich bekannter Weise abgegriffen und gespeichert. Wie oben erläutert, kann dies auf an sich bekannte Weise entweder durch Ermittlung des auf die Rollen einwirkenden Drehmoments (Reaktionsmoment) oder über den jeweiligen Motorstrom gemessen werden und Rad bzw. Bremse spezifisch abgespeichert werden.

Zusammengefasst kann man festhalten, dass das Rad 220VL bzw.220HL oder die Räder auf der einen Seite der geprüften Achse 200 bzw. 202 von mindestens einer von einem Motor 92L antreibbaren Einrichtung, vorzugsweise von einem Rollenpaar 80L, 82L in einer vorwärts gerichteten Drehrichtung antreibbar ist bzw. sind, während das andere Rad 220VR bzw. 220HR oder die Räder auf der anderen Seite der geprüften Achse 200, bzw. 202 von mindestens einer weiteren von einem Motor 92R antreibbaren Einrichtung, vorzugsweise von einem Rollenpaar 80R, 82R in die andere Drehrichtung antreibbar ist bzw. sind.

Die Art der Signalgewinnung und -verarbeitung wird nunmehr anhand der Fig. 5 näher beschrieben. Diese Beschreibung verweist ausdrücklich auf die Bezugszeichen, die bei der Prüfung der vorderen Hinterachse 200 gelten. Die Beschreibung gilt aber auch sinngemäß für die hinteren Hinterachse 202 und, wenn es sich um eine angetriebene Vorderachse handelt, auch für diese.

In der Fig. 5 sind die Rollenpaare 80L, 82L und 80R, 82R der Fig. 2 und 3 schematisch gezeigt sowie ein Leistungsteil 240 mit zwei Frequenzumrichter Fu1 und Fu2, die die jeweiligen E-Motoren (nicht gezeigt) der Rollenpaaren 80L,82L bzw. 80R, 82R mit der jeweils erwünschten Winkelgeschwindigkeit der entsprechenden Räder 220VI, 220VR bzw. 220HL, 220HR antreiben. Die Frequenzumrichter Fu1 und Fu2 erhalten die erforderliche Antriebsleistung von einem hier nicht gezeigten Stromkreis und werden von einem Signalprozessor 244 über Schalter 246, 248 und Signalleitungen 250, 252 angesteuert. Die Frequenzumrichter Fu1 und Fu2 verfügen über Rückkopplungsleitungen, die über eine erste RS485-Schnittstelle, eine Datenleitung 254 und eine weitere RS485-Schnittstelle mit einer Recheneinheit 256 mit einer Funkempfangsantenne 258 kommunizieren, die die Eingangssignale über die Datenleitung 260 und Schalter 261 an den Signalprozessor 244 anlegen.

Für beide Seiten der geprüften Achse 200 bzw.202 ist eine jeweilige identische Sensoreinrichtung 262L bzw. 262R vorgesehen, die am jeweiligen Rad bspw. 220VL und 220VR bzw. 220HL und 220HR in einer beliebigen Orientierung anbringbar ist. Die bevorzugten Sensoreinrichtungen 262L und 262R umfassen BM080-Sensoren der oben genannten Firma Hillcrest Laboratories Inc., welche wie oben erläutert mindestens drei Beschleunigungssignale in drei rechtwinkelig zueinander stehenden Koordinaten und drei gyroskopische Signale in drei ebenfalls rechtwinkelig zueinander stehenden Koordinaten und ggf. drei Magnetometersignale in drei rechtwinkelig zueinander stehenden Koordinaten erzeugt. Ferner umfassen die Sensoreinrichtungen 262L und 262R einen im Chip BM080 eingebauten Signalprozessor µC und eine Batterie 264 zur Stromversorgung. Die Signalprozessoren µC verarbeiten die genannten Beschleunigungs- und gyroskopischen Signale und wandeln diese in Funksignale um, die über eine jeweilige Funkantenne 266 als Funksignale (Pfeile 2, bzw. 3) an die Funkantenne 258 senden.

Man sieht aus den Pfeilen 1, 2 und 3 bei der Funkantenne 258 und aus den Pfeilen 1 und 2 bei der Funkantenne 266 der Sensoreinrichtung 262L bzw. aus den Pfeilen 1 und 3 bei der Funkantenne 266 der Sensoreinrichtung 262R, dass es sich jeweils um eine bidirektionale Übertragung handelt. Gemäß der Darstellung der Fig. 5 deuten die Pfeile 2 und 3 bei der Funkantenne 258 auf die Signale, die von den Sensoreinrichtungen 262L und 262R kommen. Das Pfeil 1 deutet auf die Signale, die von der Recheneinheit 256 erzeugt und an die Sensoreinrichtungen 262L und 262R geschickt werden.

In Grunde genommen stellt die Recheneinheit 256 in regelmäßigen Zeitabständen die Frage an die Sensoreinrichtungen 262L und 262R, "was ist ihr aktueller Drehwinkel"? Die Antworten kommen dann zeitversetzt zurück und sind im Regelfall entweder "Null" oder ein konkreter Winkel, der als "Null" zu betrachten ist, da es unwahrscheinlich ist, dass die beiden Sensoreinrichtungen tatsächlich mit dem Winkel Null an die Räder angebracht sind. Während der Prüfung oder der vorausgegangene Ermittlung des Flankenspiels, der weiter unten beschrieben ist, übermitteln die Sensoreinrichtungen 262L und 262R das jeweilige kumulierte Winkelsignal seit der Nullung.

Übertragen wird während der Prüfung eine Veränderung von der Ausgangslage. Es wird ein Winkel übergeben, wie weit sich das Rad seit der Nullung gedreht hat. Nicht 0-360° sondern komplett. Z.B. nach fünf kompletten Radumdrehungen wird 1800° übermittelt. In der Auswerteelektronik wird dann lediglich die Differenz gebildet von links zu rechts. Dieser positive oder negative Wert wird dann zur Regelung 244 einer Radgeschwindigkeit herangezogen und über ein Regelverhalten wird dann die Geschwindigkeit angepasst.

Wie oben gesagt, werden die Signaleinrichtungen 262L und 262R in einer beliebigen Position an die Räder 220VL und 220VR bzw. 220HL und 220HR der geprüften Achse 200 bzw. 202 angebracht, zum Beispiel mittels Magnete, die am Rad oder an der Radnabe oder am Radbolzen haften, und erzeugen die oben erwähnten Signale. Auch wenn die Position unkritisch ist, wird doch empfohlen die Sensoren möglichst nahe zur Radnabe hin zu montieren. Dadurch werden die auftretenden Fliehkräfte geringer gehalten und die Qualität der Messung wird noch etwas besser.

Da die Sensoreinrichtungen 262L und 262R mit den jeweiligen Räder 220VL und 220VR um eine horizontale Achse drehen, ändern sich die erzeugten Beschleunigungssignale, gyroskopische Signale und ggf. Magnetometersignale ständig. Die entsprechenden Werte werden von den Signalprozessoren µC in Form einer kontinuierlichen Signalfolge gebracht und über die Funkantennen 266 abgesendet. Diese Signalfolgen sind in dem Datenblatt zu dem Sensor BM080 beschrieben, die unter https://www. hillcrestlabs.com/downloads/bno080-datasheet erhältlich ist. Aus diesen Signalfolgen können von der Recheneinheit 256 Drehwinkelvektoren der jeweiligen Räder 220VL und 220VR bzw. 220HI und 220HR gebildet werden. Aus diesen Drehwinkelvektoren wird dann ein Differenzwert gebildet und dieser Differenzwert oder einer diesem proportionalen Wert wird an der Steuerung 244 angelegt, die die Drehgeschwindigkeitssignale der Frequenzumrichter Fu1 und Fu2 erzeugt. Hierdurch wird die Drehgeschwindigkeit einer der vom Motor 92L bzw. 92R antreibbaren Einrichtungen 80L,82L bzw. 80R,82R derart angesteuert, dass der Drehwinkelunterschied der Räder zum Beispiel 220VI und 220VR auf den beiden Seiten der geprüften Achse 200 während einer Bremsprüfung zumindest im Wesentlichen maximal dem Flankenspiel der geprüften Achse entspricht.

Wie aus Fig. 5 ersichtlich wird eine Geschwindigkeit des einen Rades, zum Beispiel 220VL auf 2.6kmh gesetzt und durch entsprechendes Ansteuern des E-Motors 92L vom Fu1 eingehalten. Die Drehgeschwindigkeit des anderen Rades wird vom Fu2 und E-Motor 92R so angesteuert, dass der Drehwinkelunterschied des Rades 220VR zum Rad 220VL der geprüften Achse 200 während einer Bremsprüfung zumindest im Wesentlichen maximal dem Flankenspiel der geprüften Achse 200 entspricht.

Es leuchtet ein, dass sie Signalverarbeitung auf verschiedene Weise erfolgen kann.

Die Signalprozessoren µC der Sensoreinrichtungen 262L und 262R können zum Beispiel programmiert werden, um die Drehwinkelsignale aus den Sensorsignalen zu gewinnen. Diese Drehwinkelsignale könnten dann in der Recheneinheit 256 zu dem Differenzwert weiterverarbeitet werden oder diese Funktion könnte direkt in dem Signalprozessor 244 realisiert werden. Ferner könnte die Recheneinheit 256 entfallen und sowohl die Rückkopplungssignale der Frequenzumrichter Fu1 und Fu2 als auch die Funksignale der Sensoreinrichtungen 262L und 262R5 dem Signalprozessor 244 direkt zugeführt werden. in diesem Falle wäre der Funkempfangsantenne 258 am Signalprozessor anzuordnen.

Da die Drehwinkelvektoren, die von den Sensoreinrichtungen 262L und 262R abgeleitet werden, bei einem sich drehenden Rad 220VI bzw. 220VR zyklisch von Plus ins Minus und wieder ins Plus usw. zeigen, wird erfindungsgemäß mindestens ein den Sensoreinrichtungen 262L und 262R zugeordneter Prozessor vorgesehen, zum Beispiel die Recheneinheit 258 oder der Signalprozessor 244, um diese Drehwinkelvektoren zu verarbeiten. Der Prozessor 244 oder 258 manipuliert dann die Drehwinkelvektoren des jeweiligen Rades während einer Prüfung derart, dass sie einen kumulativen Drehwinkelwert bilden, der der Differenzbildung zuführbar ist, anstelle Drehwinkel mit abwechselnd Plus- und Minuszeichen auszugeben. Die Funktion der kumulativen Drehwinkelbildung kann auch bei entsprechender Programmierung in den jeweiligen Signalprozessoren µC durchgeführt werden.

Wenn man die Signalverarbeitung betrachtet stellt sich die Frage wie diese funktioniert, wenn die Sensoreinrichtungen in beliebiger Orientierung und gar auch in beliebigen Positionen an den Rädern 220VL und 220VR angebracht werden, wobei diese Positionen für jedes Rad 220VL und 220VRf unterschiedlich sein können.

Eine Möglichkeit hier Abhilfe zu schaffen, liegt in der Signalverarbeitung um das Flankenspiel bzw. das Achsspiel zu ermitteln. Bspw. kann die Steuereinrichtung 244 programmiert werden, um mindestens folgende Funktionen am Anfang einer Bremsprüfung durchzuführen, wobei diese Beschreibung exemplarisch für die vordere Hinterachse erläutert wird aber genauso für eine angetriebene Vorderachse oder eine hintere Hinterachse 202 gilt:
a) Die vom Motor 92L angetriebene Einrichtung für das Rad 220VL bzw. die Räder auf der einen Seite der Achse 200 in einer Drehrichtung in Gang zu setzen und die Drehwinkelposition dieses Rades220VL bzw. dieser Räder mit Hilfe der jeweiligen Sensoreinrichtung 262L zu überwachen,
b) die Drehwinkelposition des Rades 220VR bzw. der Räder auf der anderen Seite der Achse 200, das bzw. die aufgrund des Differentials 214 und des Feststehens der Kardanwelle 208 in die entgegengesetzte Drehrichtung zu drehen versucht bzw. versuchen, mit Hilfe der auf dieser Seite der Achse 200 vorgesehenen Sensoreinrichtung 262R zu überprüfen, wobei nach einer Drehbewegung von wenigen Grad der Antrieb der geprüften Achse 200 mit Sicherheit an einer Seite der Verzahnung anliegt und sich der Bremswert des bzw. der in die entgegengesetzte Drehrichtung drehenden Rades 220VR bzw. Räder einen vorher festgelegten Schwellwert erreicht,
c) beim Erreichen dieses Schwellwertes die momentanen Winkelpositionen der Räder 220VL und 220VR der geprüften Achse 200 genullt werden,
d) das Rad 220VL bzw. die Räder auf einer Seite der Achse 200 anschließend in die Gegenrichtung zu drehen, bis der Schwellwert erneut in die andere Richtung überschritten wird,
e) die Winkelpositionen der Räder 220VI und 220VR auf beiden Seiten der Achse 200 beim Erreichen des Schwellenwerts in die andere Richtung zu ermitteln,
f) die Winkeldifferenz zwischen dem im Schritt e) ermittelten Winkelpositionen ermittelt, die dem Zahnflankenspiel bzw. dem Achsspiel entspricht, und
g) die Drehgeschwindigkeit der Räder 220VL und 220VR über die von Motor angetriebenen Einrichtungen derart anzusteuern, dass die während der Bremsprüfung ermittelte Winkeldifferenz das Zahnflankenspiel nicht übersteigt. Wie oben gesagt wird vorzugsweise vor der Bremswertmessung das eine Rad noch um die Hälfte des ermittelten Zahnflankenspiels zurückgedreht w Dann steht das Differenzial frei. So werden von Vornherein Kraftübertragungen minimiert

Das erfindungsgemäße Verfahren zur Prüfung der Radbremsen einer Achse eines Fahrzeugs mit der oben erläuterten Bremsprüfeinrichtung kann wie folgt zusammengefasst werden, wobei auch diese Erläuterung exemplarisch für die vordere Hinterachse 200 gegeben wird, aber auch sinngemäß für eine angetriebene Vorderachse oder eine hintere Hinterachse 202 gilt:
a) Anbringung einer jeweiligen Sensoreinrichtung 262L, 262R auf ein Rad 220VL, 220VR auf jeder Seite der geprüften Achse 200 in einer beliebigen Orientierung, welche Signale erzeugt, aus denen ein Drehwinkelvektor des jeweiligen Rades 220VI bzw. 220VR um eine zumindest im Wesentlichen horizontale Achse erzeugt wird,
b) die Kardanwelle 208 festgehalten wird, bspw. entweder mit einer Sperre im Antriebsstrang oder durch Bodenkontakt der Räder 220HL, 220HR einer anderen Achse 202 des Fahrzeugs, die mit der geprüften Achse 200 zumindest im Wesentlichen schlupffrei gekoppelt ist,
c) Antreiben des Rades 220VL bzw. der Räder auf einer Seite der geprüften Achse in einer Drehrichtung mittels einer von einem Motor 92L angetriebenen Einrichtung 80L, 82L,
d) Steuern der Drehgeschwindigkeit der einen Einrichtung 80L, 82L, damit das Rad 220VL bzw. die Räder auf der entsprechenden Seite der geprüften Achse 200 sich bei einer vorgegebener Drehgeschwindigkeit dreht bzw. drehen,
e) Drehen des Rades 220VR bzw. der Räder auf der anderen Seite der geprüften Achse 200 mittels der entsprechenden weiteren vom Motor 92R angetriebenen Einrichtung 80R, 82R in der entgegengesetzten Drehrichtung,
f) Steuern der Drehgeschwindigkeit von einem der Motoren 92L, 92R, um sicherzustellen, dass der Drehwinkelunterschied zwischen den Rädern 220VL und 220VR auf beiden Seiten der geprüften Achse 200 kleiner ist als das Zahnflankenspiel bzw. das Achsspiel,
g) Durchführen einer Bremsprüfung bei mindestens des bzw. der sich vorwärts drehenden Rades 220VL bzw. Räder.

Zusammengefasst kann man die vorliegende Erfindung wie folgt beschreiben:
Bei einem Fahrzeug, bei dem mehrere Differentiale der Achsen ohne Ausgleichsmöglichkeit (z.B.: Visco Kupplung) verbunden sind, führt das Feststehen einer Achse zur Blockierung aller Differentiale. Somit können sich die Halbachsen nur mehr drehen, wenn die gegenüberliegende Halbachse sich mit entsprechender Geschwindigkeit in die entgegengesetzte Richtung dreht.

Nachdem sich bei einem Bremsentest die zu testende Achse auf einem Rollenprüfstand befindet, und die restlichen Achsen durch das Feststehen am Boden still stehen, kann es von der einen zur anderen Halbachse zu einem Kraftschluss kommen.

Solange die beiden Halbachsen komplett identische Drehbewegungen vollziehen, kommt es zu keinem Kraftübertrag. Kleine Unterschiede, wie z.B.: Reifenluftdruck, Unterschiede im Reifenumfang, Unterschiede im Antriebssystem des Rollenprüfstandes, führen aber zu einer unterschiedlichen Drehbewegung der Halbachse. Beim Bremsen führt der Schlupf der Reifen auf den Rollen zusätzlich zu einer Differenz in der absoluten Drehbewegung. Wenn es zu so einem Kraftschluss kommt, wird ein Teil der Bremskraft über das Differential auf die andere Seite übertragen. Es wird genau so viel Kraft übertragen, dass sich die Summe der Kräfte ausbalanciert. Das Resultat sind stark verfälschte Bremswerte. Meistens gleichen sich die Bremswerte an, somit wird ein Bremskraftunterschied nicht oder nicht ausreichend erkannt.

Um dennoch einen verlässlichen Bremstest durchführen zu können, ist es notwendig die beiden Halbachsen genau identisch von Beginn weg zu drehen, damit es zu keinem Kraftübertrag kommt. Ausschlaggebend ist die Kardanwelle, welche beim Zahnkranz nach Möglichkeit an keiner Zahnflanke anliegt.

Die Erkennung dieses Zustandes kann durch erstmaliges langsames Loslaufen eines Rades in eine Richtung geschehen. Nach einer Drehbewegung von wenigen Grad liegt die Kardanwelle mit Sicherheit an einer Seite der Verzahnung an. Erkennbar wird das dadurch, dass sich der Bremswert des still stehenden Rades verändert. Normalerweise sollte hier eine Bremskraft von 0 Newton anliegen. Es wird ein Schwellwert festgelegt, welcher entweder über- oder unterschritten wird. Beim Erreichen dieses Schwellwertes werden die momentanen Winkelpositionen genullt. Dann wird das Rad langsam in die Gegenrichtung gedreht, bis der Schwellwert erneut in die andere Richtung überschritten wird. Die Winkeldifferenz zeigt nun das Zahnflankenspiel an. Nun wird um die Hälfte dieses Winkels wieder zurückgedreht.

Dann wird diese Position erneut genullt. Nun befindet sich das Differential im Zahnflankenspiel und es herrscht kein Kraftschluss.

Während der gesamten Messung ist es nun Ziel, dass sich die linke und die rechte Halbachse immer um die gleiche Winkeldifferenz zu diesem Ausgangswert verdreht befinden. Wenn sich eine Halbachse mehr gedreht hat als das halbe Zahnflankenspiel, welches vor dem Test ermittelt wurde, liegt das Zahnrad der Kardanwelle wieder am Zahnkranz an und es gibt einen Kraftschluss.

Um einen Kraftschluss wieder zu lösen, muss entweder das nacheilende Rad beschleunigt, oder das voreilende Rad verlangsamt werden. Hierfür sind verschiedene Möglichkeiten denkbar. In unserem Fall wird der Ausgleich über Frequenzumrichter umgesetzt.

Die Besonderheit dieser Entwicklung ist, dass es bisher nicht möglich war, mittels Beschleunigungssensoren oder Gyrosensoren (Drehwinkelsensoren) den momentanen Winkel präzise genug zu ermitteln. Erst durch die Verwendung neuerer Halbleiterbauteile mit einem leistungsfähigen Prozessor und einer hochentwickelten Auswertesoftware kann eine dynamische Winkelauswertung stattfinden, die über den gesamten Test präzise genug ist.

### Bezugszeichenliste

- 10: Fahrzeug
- 12: Vorderachse
- 14: Hinterachse
- 16: Pfeile = normale Fahrtrichtung
- 18: Motor des Fahrzeugs
- 20: Getriebe
- 22: Ausgangswelle des Getriebes 20
- 24: Verteilergetriebe
- 26: erste Ausgangswelle des Verteilergetriebes
- 28: zweite Ausgangswelle des Verteilergetriebes
- 30: dritte Ausgangswelle des Verteilergetriebes
- 32: Antriebsritzel des Ausgleichgetriebes der Vorderachse
- 32H: Antriebsritzel des Ausgleichgetriebes der Hinterachse
- 34: Tellerrad des Ausgleichgetriebes der Vorderachse
- 34H: Tellerrad des Ausgleichgetriebes der Hinterachse
- 36: Ausgleichsgetriebe
- 38: Gehäuse des Ausgleichsgetriebes
- 40: Ausgleichsgehäuse des Ausgleichgetriebes
- 42: Antriebskegelrad der Vorderachse
- 42H: Antriebskegelrad der Hinterachse
- 44: Antriebskegelrad der Vorderachse
- 44H: Antriebskegelrad der Hinterachse
- 46: Antriebswelle der Vorderachse
- 48: Antriebswelle der Vorderachse
- 50: Ausgleichsrad
- 52: Ausgleichsrad
- 54: Ausgleichsbolzen
- 56: Lamellenkupplung
- 58: Lamellenkupplung
- 60L: linkes Vorderrad
- 60R: rechtes Vorderrad
- 61L: linke Bremsscheibe der Vorderachse
- 61R: rechte Bremsscheibe der Vorderachse
- 62: Achswelle der Hinterachse
- 64: Achswelle der Hinterachse
- 66L: Hinterrad links
- 66R: Hinterrad rechts
- 67L: linke Bremsscheibe der Hinterachse
- 67R: rechte Bremsscheibe der Hinterachse
- 80R: erste Rolle des rechten Rollenpaares
- 82R: zweite Rolle des rechten Rollenpaares
- 80L: erste Rolle des linken Rollenpaares
- 82L: zweite Rolle des linken Rollenpaares
- 86: quaderförmiges Gehäuse der Rollenpaare
- 88: Schweißraupen
- 90R: umlaufende Kette rechtes Rollenpaar
- 90L: umlaufende Kette linkes Rollenpaar
- 92R: E-Motor rechtes Rollenpaar
- 92L: E-Motor linkes Rollenpaar
- 94R: Getriebe rechtes Rollenpaar
- 94L: Getriebe linkes Rollenpaar
- 96R: Antriebswelle rechtes Rollenpaar
- 96L: Antriebswelle linkes Rollenpaar
- 98R: Lagerung für rechte Rolle 80R
- 98L: Lagerung für linke Rolle 80L
- 100R: elektronische Steuerung des E-Motors 92R
- 100L: elektronische Steuerung des E-Motors 92L
- 102R: Schaltstange rechts
- 102L: Schaltstange links
- 104R: Elektroschalter
- 104L: Elektroschalter
- 200: vordere Hinterachse
- 202: hintere Hinterachse
- 204: Differential vorderer Hinterachse
- 206: Antrieb für das Differential 204
- 208: Kardanwelle
- 210: Antriebsritzel
- 212: Tellerrad
- 214: Ausgleichsgetriebe
- 216: Halbwelle vorderer Hinterachse
- 218: Halbwelle vorderer Hinterachse
- 220VL: linkes Rad der vorderen Hinterachse 200
- 220VR: rechtes Rad der vorderen Hinterachse 200
- 220HL: linkes Rad der hinteren Hinterachse 204
- 220HR: rechtes Rad der hinteren Hinterachse 204
- 222VL: Betätigungseinrichtung der Bremse des linken Rades 220VL
- 222VR: Betätigungseinrichtung der Bremse des rechten Rades 220VR
- 222HL: Betätigungseinrichtung der Bremse des linken Rades 220HL
- 222HR: Betätigungseinrichtung der Bremse des rechten Rades 220HR
- 224: zweites Ritzel
- 226: Abtriebswelle
- 228: Antriebsritzel des zweiten Differentials 230
- 230: zweites Differential
- 232: Tellerrad des Differentials 230
- 234: Ausgleichsgetriebe des Differentials 230
- 236: Halbwelle der Hinterachse 204
- 238: Halbwelle der Hinterachse 204
- 240: Leistungsteil
- 244: Signalprozessor
- 246: Schalter
- 248: Schalter
- 250: Signalleitung
- 252: Signalleitung
- 254: Datenleitung
- 256: Recheneinheit
- 258: Funkempfangsantenne
- 260: Datenleitung
- 261: Schalter
- 262L: Sensoreinrichtung
- 262R: Sensoreinrichtung
- 266: Funkantenne

- B: Werkstattboden

## Patentansprüche

1. Bremsprüfeinrichtung für ein Fahrzeug (10) mit mindestens einer antreibbaren Achse (12, 14; 200, 202) mit einem Differential (36, 36H; 204, 230) und mit einem Antrieb (28, 30; 208, 226) für das Differential, bei der der Antrieb während der Bremsprüfung drehfest haltbar ist, wobei das Rad (60L, 60R, 66L, 66R; 220VI, 220VR; 220HL, 220HR) oder die Räder auf der einen Seite der geprüften Achse (12, 14; 200, 202) von mindestens einer von einem Motor (92L, 92R) antreibbaren Einrichtung, vorzugsweise von einem Rollenpaar (80L, 82L, 80R, 82R) in einer vorwärts gerichteten Drehrichtung antreibbar ist bzw. sind, während das andere Rad (60L, 60R, 66L, 66R; 220VI, 220VR; 220HL, 220HR) oder die Räder auf der anderen Seite der geprüften Achse von mindestens einer weiteren von einem Motor (92L, 92R) antreibbaren Einrichtung, vorzugsweise von einem Rollenpaar (in die andere Drehrichtung antreibbar ist bzw. sind,
**dadurch gekennzeichnet,**
**dass** sie für beide Seiten der geprüften Achse (12, 14; 200, 202) eine jeweilige Sensoreinrichtung (262L, 262R) aufweist, die am jeweiligen Rad (60L, 60R, 66L, 66R; 220VI, 220VR; 220HL, 220HR) in einer beliebigen Orientierung anbringbar ist und welche Drehsignale des Rades bezogen auf eine zumindest im Wesentlichen horizontale Achse erzeugt, dass mindestens ein Signalprozessor (µC, 244; 256) vorgesehen ist, der aus den Drehsignalen der Sensoreinrichtungen Drehwinkelvektoren und aus den Drehwinkelvektoren einen Differenzwert bildet, und dass der Differenzwert oder eine diesem proportionalen Wert an einer die Bremsprüfeinrichtung zugeordneten Steuerung (244) anlegbar ist, die die Drehgeschwindigkeit einer der vom Motor (92L, 92R) antreibbaren Einrichtungen (80L, 82L; 80R, 82R) derart ansteuert, dass der Drehwinkelunterschied der Räder (60L, 60R, 66L, 66R; 220VI, 220VR; 220HL, 220HR) auf den beiden Seiten der geprüften Achse während einer Bremsprüfung zumindest im Wesentlichen maximal dem Flankenspiel der geprüften Achse entspricht.

2. Bremsprüfeinrichtung nach Anspruch 1,
**dadurch gekennzeichnet,**
**dass** mindestens ein den Sensoreinrichtungen (262L, 262R) zugeordneter Prozessor (µC; 244; 256) vorgesehen ist, der die Drehwinkelvektoren des jeweiligen Rades (60L, 60R, 66L, 66R; 220VI, 220VR; 220HL, 220HR) während einer Prüfung derart manipuliert, dass sie einen kumulativen Drehwinkelwert bilden, der der Differenzbildung zuführbar ist, anstelle Drehwinkel mit abwechselnd Plus- und Minuszeichen auszugeben.

3. Bremsprüfeinrichtung nach Anspruch 1,
**dadurch gekennzeichnet,**
**dass** die Sensoreinrichtungen (262L, 262R) jeweils als Halbleiterbauteile vorliegen und aus der Gruppe der folgenden Sensoreinrichtungen gewählt sind: Drehwinkelsensor zum Beispiel ein Beschleunigungssensor, ein Gyro-Sensor, ein magnetische differentielle Hall-Sensor oder ein induktive Winkelmesssensor, eine Kombination eines Gyro-Sensors mit einem Beschleunigungssensors, eine Kombination mehrere Gyro-Sensoren mit einem oder mehreren Beschleunigungssensoren, eine Kombination eines Gyro-Sensors mit mehreren Beschleunigungssensoren, eine Kombination von drei Beschleunigungssensoren in drei rechtwinkelig zueinander stehenden Koordinatenrichtungen und drei Gyro-Sensoren in drei ebenfalls rechtwinkelig zueinander stehenden Koordinatenrichtungen und eine Kombination von drei Beschleunigungssensoren in drei rechtwinkelig zueinander stehenden Koordinatenrichtungen und drei Gyro-Sensoren in drei ebenfalls rechtwinkelig zueinander stehenden Koordinatenrichtungen sowie drei Magnetometersensoren die Magnetometersignale in drei rechtwinkelig zueinander stehende Koordinaten erzeugen und dass mindestens ein Signalprozessor (µC; 244; 256) vorgesehen ist, der aus mindestens einige der Signale das jeweilige Drehwinkelsignal bzw. ein kumuliertes Drehwinkelsignal für das entsprechende Rad (60L, 60R, 66L, 66R; 220VI, 220VR; 220HL, 220HR) um die zumindest im Wesentlichen horizontale Achse ermittelt.

4. Bremsprüfeinrichtung nach einem der vorhergehenden Ansprüchen,
**dadurch gekennzeichnet,**
**dass** eine Steuereinrichtung (244) vorgesehen ist, die programmiert ist, um mindestens folgende Funktionen am Anfang einer Bremsprüfung durchzuführen:
a) die vom Motor (92L, 92R) angetriebene Einrichtung (80L, 82L; 80R, 82R) für das Rad (60L, 60R, 66L, 66R; 220VI, 220VR; 220HL, 220HR) bzw. die Räder auf der einen Seite der Achse (12, 14;200,202) in einer Drehrichtung in Gang zu setzen und die Drehwinkelposition dieses Rades (60L, 60R, 66L, 66R; 220VI, 220VR; 220HL, 220HR) bzw. dieser Räder mit Hilfe der jeweiligen Sensoreinrichtung (262L, 262R) zu überwachen,
b) die Drehwinkelposition des Rades (60L, 60R, 66L, 66R; 220VI, 220VR; 220HL, 220HR) bzw. der Räder auf der anderen Seite der Achse (12, 14; 200, 202), das bzw. die aufgrund des Differentials (36, 36H; 204,230) und des Feststehens der Kardanwelle (28, 30; 208, 226) in die entgegengesetzte Drehrichtung zu drehen versucht bzw. versuchen, mit Hilfe der auf dieser Seite der Achse vorgesehenen Sensoreinrichtung (262L, 262R) zu überprüfen, wobei nach einer Drehbewegung von wenigen Grad der Antrieb der geprüften Achse mit Sicherheit an einer Seite der Verzahnung anliegt und sich der Bremswert des bzw. der in die entgegengesetzte Drehrichtung drehenden Rades (60L, 60R, 66L, 66R; 220VI, 220VR; 220HL, 220HR) bzw. Räder einen vorher festgelegten Schwellwert erreicht,
c) beim Erreichen dieses Schwellwertes die momentanen Winkelpositionen der Räder (60L, 60R, 66L, 66R; 220VI, 220VR; 220HL, 220HR) der geprüften Achse 12, 1400, 202 genullt werden,
d) das Rad (60L, 60R, 66L, 66R; 220VI, 220VR; 220HL, 220HR) bzw. die Räder auf einer Seite der Achse anschließend in die Gegenrichtung zu drehen bis der Schwellwert erneut in die andere Richtung überschritten wird,
e) die Winkelpositionen der Räder (60L, 60R, 66L, 66R; 220VI, 220VR; 220HL, 220HR) auf beiden Seiten der Achse beim Erreichen des Schwellenwerts in die andere Richtung zu ermitteln,
f) die Winkeldifferenz zwischen dem im Schritt e) ermittelten Winkelpositionen ermittelt, die dem Zahnflankenspiel bzw. dem Achsspiel entspricht, und
g) die Drehgeschwindigkeit der Räder über die von Motor (92L, 92R) angetriebenen Einrichtungen derart anzusteuern, dass die während der Bremsprüfung ermittelte Winkeldifferenz das Zahnflankenspiel nicht übersteigt.

5. Bremsprüfeinrichtung nach einem der vorhergehenden Anspruche,
**dadurch gekennzeichnet,**
**dass** es sich bei jeder Sensoreinrichtung (262L, 262R) um einen Ein-Chip-Sensor mit integriertem Prozessor (µC) handelt.

6. Bremsprüfeinrichtung nach einem der vorhergehenden Ansprüche,
**dadurch gekennzeichnet,**
**dass** es sich bei jeder Sensoreinrichtung (262L, 262R) um eine Sensoreinrichtung des Typs BNO080 oder BNO085 der Firma Hillcrest Laboratories Inc. handelt.

7. Bremsprüfeinrichtung nach einem der vorhergehenden Ansprüche,
**dadurch gekennzeichnet,**
**dass** jede Sensoreinrichtung (262L, 262R) mit einer Einrichtung zu deren Anbringung an einem Rad (60L, 60R, 66L, 66R; 220VI, 220VR; 220HL, 220HR) oder einem Radbolzen oder an einer Radmutter oder einer Radnabe oder in einer Radöffnung ausgelegt ist.

8. Bremsprüfeinrichtung nach Anspruch 7,
**dadurch gekennzeichnet,**
**dass** die Anbringungseinrichtung einen Magneten oder Elektromagneten umfasst.

9. Bremsprüfeinrichtung nach Anspruch 7,
**dadurch gekennzeichnet,**
**dass** die Anbringungseinrichtung ausgelegt ist, um mittels Saugkraft, Klebkraft oder mit einem mechanischen Verschluss, bspw. mit einem elastischen Riemen mit Schnalle oder Klettverschluss oder mit einem wiederverwendbaren Kabelbinder am Rad (60L, 60R, 66L, 66R; 220VI, 220VR; 220HL, 220HR) angebracht zu werden.

10. Bremsprüfeinrichtung nach einem der vorhergehenden Ansprüche,
**dadurch gekennzeichnet,**
**dass** es für Fahrzeuge mit zwei hintereinander angeordneten angetriebenen Achsen (200, 202), bei denen die Bremsen der Räder (220VI, 220VR) der einen Achse (200) getrennt von den Bremsen der Räder (220HL, 220HR) der anderen Achse (202) prüfbar sind, und die eine Achse (200) direkt oder indirekt von einem Fahrzeugmotor antreibbar ist und einen Abtrieb (226) aufweist, der mit einem Differential (230) der anderen Achse (202) direkt oder indirekt gekoppelt ist.

11. Bremsprüfeinrichtung nach Anspruch 10,
**dadurch gekennzeichnet,**
**dass** es sich bei dem Fahrzeug um ein Militärfahrzeug oder ein Baustellen- oder Bergwerksfahrzeug handelt.

12. Verfahren zur Prüfung der Radbremsen einer Achse (12, 14; 200,202) eines Fahrzeugs (10) mit der Bremsprüfeinrichtung gemäß mindestens einem der vorhergehenden Ansprüche mit mindestens den folgenden Merkmalen:
a) Anbringung einer jeweiligen Sensoreinrichtung (262L, 262R) auf ein Rad (60L, 60R, 66L, 66R; 220VI, 220VR; 220HL, 220HR) auf jeder Seite der geprüften Achse (12, 14; 200, 202) in einer beliebigen Orientierung, welche Signale erzeugt, aus denen ein Drehwinkelvektor des Rades (60L, 60R, 66L, 66R; 220VI, 220VR; 220HL, 220HR) um eine zumindest im Wesentlichen horizontale Achse erzeugt,
b) die Kardanwelle (28, 30; 2ß8; 226) festgehalten wird, bspw. entweder mit einer Sperre im Antriebsstrang oder durch Bodenkontakt der Räder einer anderen Achse des Fahrzeugs, die mit der geprüften Achse zumindest im Wesentlichen schlupffrei gekoppelt ist,
c) Antreiben des Rades (60L, 60R, 66L, 66R; 220VI, 220VR; 220HL, 220HR) bzw. der Räder auf einer Seite der geprüften Achse in einer Drehrichtung mittels einer von einem Motor (92L, 82R) angetriebenen Einrichtung (80L, 82L, 80R, 82R),
d) Steuern der Drehgeschwindigkeit der einen Einrichtung (80L, 82L; 80R, 82R), damit das Rad (60L, 60R, 66L, 66R; 220VI, 220VR; 220HL, 220HR) bzw. die Räder auf der entsprechenden Seite der geprüften Achse (12, 14; 20, 202) sich bei einer vorgegebener Drehgeschwindigkeit dreht bzw. drehen,
e) Drehen des Rades (60L, 60R, 66L, 66R; 220VI, 220VR; 220HL, 220HR) bzw. der Räder auf der anderen Seite der geprüften Achse mittels der entsprechenden weiteren vom Motor (92L, 92R) angetriebenen Einrichtung in der entgegengesetzten Drehrichtung,
f) Steuern der Drehgeschwindigkeit von einem der Motore (92L, 92R), um sicherzustellen, dass der Drehwinkelunterschied zwischen den Rädern (60L, 60R, 66L, 66R; 220VI, 220VR; 220HL, 220HR) auf beiden Seiten der geprüften Achse kleiner ist als das Zahnflankenspiel bzw. das Achsspiel,
g) Durchführen einer Bremsprüfung bei mindestens des bzw. der sich vorwärts drehenden Rades (60L, 60R, 66L, 66R; 220VI, 220VR; 220HL, 220HR) bzw. Räder.

13. Verfahren nach Anspruch 12,
**dadurch gekennzeichnet,**
**dass** Sensoreinrichtungen (262) ausgewählt werden, die jeweils als Halbleiterbauteile vorliegen, die mindestens drei Beschleunigungssignale in drei rechtwinkelig zueinander stehenden Koordinaten und drei gyroskopische Signale in drei ebenfalls rechtwinkelig zueinander stehende Koordinaten und ggf. drei Magnetometersignale in drei rechtwinkelig zueinander stehenden Koordinaten erzeugen und mindestens ein Signalprozessor (µC; 244; 256) vorgesehen ist, der aus mindestens einiger der Signale das jeweilige Drehwinkelsignal für das entsprechende Rad (60L, 60R, 66L, 66R; 220VI, 220VR; 220HL, 220HR) um die zumindest im Wesentlichen horizontale Achse ermittelt.

14. Bremsprüfeinrichtung nach Anspruch 12 oder 13,
**dadurch gekennzeichnet,**
**dass** für jede Umdrehung des jeweiligen Rades (60L, 60R, 66L, 66R; 220VI, 220VR; 220HL, 220HR) ein dem jeweiligen Sensor 262L, 262R) zugeordneter Prozessor (µC; 244; 256) die Drehwinkelvektoren des jeweiligen Rades (60L, 60R, 66L, 66R; 220VI, 220VR; 220HL, 220HR) derart während einer Prüfung manipuliert, dass sie einen kumulativen Drehwinkelwert bilden, anstelle einen Drehwinkelvektor anzuzeigen, der abwechselnd vorwärts und rückwärts zeigt.

15. Verfahren nach einem der vorhergehenden Ansprüchen 12 bis 14,
**dadurch gekennzeichnet,**
**dass** eine Steuereinrichtung (244) vorgesehen ist, die programmiert ist, um mindestens folgende Funktionen am Anfang einer Bremsprüfung durchzuführen:
a) die vom Motor (92L, 92R) angetriebene Einrichtung (80L, 82L; 80R, 82R) für das Rad (60L, 60R, 66L, 66R; 220VI, 220VR; 220HL, 220HR) bzw. die Räder auf der einen Seite der Achse (12, 14;200, 202) in einer Drehrichtung in Gang zu setzen und die Drehwinkelposition dieses Rades (60L, 60R, 66L, 66R; 220VI, 220VR; 220HL, 220HR) bzw. dieser Räder mit Hilfe der jeweiligen Sensoreinrichtung zu überwachen,
b) die Drehwinkelposition des Rades (60L, 60R, 66L, 66R; 220VI, 220VR; 220HL, 220HR) bzw. der Räder auf der anderen Seite der Achse (12, 14; 200, 202), aufgrund des Differentials (36, 36H; 204, 230) und des Feststehens der Kardanwelle (28, 30; 208, 226) in die entgegengesetzte Drehrichtung zu drehen versucht bzw. versuchen, mit Hilfe der auf dieser Seite der Achse (12, 14; 200, 202) vorgesehenen Sensoreinrichtung (262L, 262R) zu überprüfen, wobei nach einer Drehbewegung von wenigen Grad der Antrieb der geprüften Achse mit Sicherheit an einer Seite der Verzahnung anliegt und sich der Bremswert des bzw. der in die entgegengesetzte Drehrichtung drehenden Rades (60L, 60R, 66L, 66R; 220VI, 220VR; 220HL, 220HR) bzw. Räder einen vorher festgelegten Schwellwert erreicht,
c) beim Erreichen dieses Schwellwertes die momentanen Winkelpositionen der Räder (60L, 60R, 66L, 66R; 220VI, 220VR; 220HL, 220HR) der geprüften Achse (12, 14; 200, 202) genullt werden,
d) das Rad (60L, 60R, 66L, 66R; 220VI, 220VR; 220HL, 220HR) bzw. die Räder auf einer Seite der Achse (12, 14; 200, 202) anschließend in die Gegenrichtung zu drehen, bis der Schwellwert erneut in die andere Richtung überschritten wird,
e) die Winkelpositionen der Räder (60L, 60R, 66L, 66R; 220VI, 220VR; 220HL, 220HR) auf beiden Seiten der Achse (12, 14; 200, 202) beim Erreichen des Schwellwerts in die andere Richtung zu ermitteln,
f) die Winkeldifferenz zwischen dem im Schritt e) ermittelten Winkelpositionen ermittelt, die dem Zahnflankenspiel bzw. dem Achsspiel entspricht, und
g) die Drehgeschwindigkeit der Räder (60L, 60R, 66L, 66R; 220VI, 220VR; 220HL, 220HR) über die von Motor (92L, 92R) angetriebenen Einrichtungen (80L, 82L; 80R, 82R) derart anzusteuern, dass die während der Bremsprüfung ermittelte Winkeldifferenz das Zahnflankenspiel nicht übersteigt.

## Claims

1. A brake testing device for a vehicle (10), comprising at least one drivable axle (12, 14; 200, 202) having a differential (36, 36H; 204, 230) and having a drive (28, 30; 208, 226) for the differential, in which brake testing device the drive can be rotationally fixedly held during the brake test, wherein the wheel (60L, 60R, 66L, 66R; 220VI, 220VR; 220HL, 220HR) or the wheels at the one side of the tested axle (12, 14; 200, 202) can be driven by at least one device drivable by a motor (92L, 92R), preferably by a roller pair (80L, 82L, 80R, 82R), in a forward-directed rotational direction, while the other wheel (60L, 60R, 66L, 66R; 220VI, 220VR; 220HL, 220HR) or the wheels at the other side of the tested axle can be driven by at least one further device drivable by a motor (92L, 92R), preferably by a roller pair (in the other rotational direction),
**characterized in that**
the brake testing device has, for both sides of the tested axle (12, 14; 200, 202), a respective sensor device (262L, 262R) which can be attached to the respective wheel (60L, 60R, 66L, 66R; 220VI, 220VR; 220HL, 220HR) in any desired orientation and which generates rotary signals of the wheel with respect to an at least substantially horizontal axis, **in that** at least one signal processor (µC, 244; 256) is provided which forms rotary angle vectors from the rotary signals of the sensor devices and forms a difference value from the rotary angle vectors, and **in that** the difference value or a value proportional thereto can be applied to a control (244) which is associated with the brake testing device and which controls the rotational speed of one of the devices (80L, 82L; 80R, 82R) drivable by the motor (92L, 92R) such that, during a brake test, the rotary angle difference of the wheels (60L, 60R, 66L, 66R; 220VI, 220VR; 220HL, 220HR) at the two sides of the tested axle at least substantially at most corresponds to the backlash of the tested axle.

2. A brake testing device in accordance with claim 1,
**characterized in that**
at least one processor (µC; 244; 256) associated with the sensor devices (262L, 262R) is provided which manipulates the rotary angle vectors of the respective wheel (60L, 60R, 66L, 66R; 220VI, 220VR; 220HL, 220HR) during a test such that they form a cumulative rotary angle value which can be fed to the difference formation instead of outputting rotary angles with alternating plus and minus signs.

3. A brake testing device in accordance with claim 1,
**characterized in that**
the sensor devices (262L, 262R) are each present as semiconductor components and are selected from the group of the following sensor devices: a rotary angle sensor, for example, an acceleration sensor, a gyro sensor, a magnetic differential Hall sensor or an inductive angle measurement sensor, a combination of a gyro sensor with an acceleration sensor, a combination of a plurality of gyro sensors with one or more acceleration sensors, a combination of a gyro sensor with a plurality of acceleration sensors, a combination of three acceleration sensors in three coordinate directions standing at right angles to one another and three gyro sensors in three coordinate directions likewise standing at right angles to one another and a combination of three acceleration sensors in three coordinate directions standing at right angles to one another and three gyro sensors in three coordinate directions likewise standing at right angles to one another as well as three magnetometer sensors which generate magnetometer signals in three coordinates standing at right angles to one another, and **in that** at least one signal processor (µC; 244; 256) is provided which, from at least some of the signals, generates the respective rotary angle signal or a cumulative rotary angle signal for the corresponding wheel (60L, 60R, 66L, 66R; 220VI, 220VR; 220HL, 220HR) about the at least substantially horizontal axis.

4. A brake testing device in accordance with any one of the preceding claims,
**characterized in that**
a control device (244) is provided which is programmed to perform at least the following functions at the beginning of a brake test:
(a) to put the device (80L, 82L; 80R, 82R), driven by the motor (92L, 92R), for the wheel (60L, 60R, 66L, 66R; 220VI, 220VR; 220HL, 220HR) or the wheels at the one side of the axle (12, 14; 200, 202) into motion in one rotational direction and to monitor the rotary angle position of this wheel (60L, 60R, 66L, 66R; 220VI, 220VR; 220HL, 220HR) or these wheels by means of the respective sensor device (262L, 262R),
b) to check the rotary angle position of the wheel (60L, 60R, 66L, 66R; 220VI, 220VR; 220HL, 220HR) or the wheels at the other side of the axle (12, 14; 200, 202), which wheel or wheels attempts or attempt to rotate in the opposite rotational direction due to the differential (36, 36H; 204, 230) and the immobilization of the Cardan shaft (28, 30; 208, 226), by means of the sensor device (262L, 262R) provided at that side of the axle, wherein, after a rotational movement of a few degrees, the drive of the tested axle certainly contacts one side of the toothed arrangement and the braking value of the wheel or wheels (60L, 60R, 66L, 66R; 220VI, 220VR; 220HL, 220HR) rotating in the opposite rotational direction reaches a previously defined threshold value,
c) when this threshold value is reached, the current angular positions of the wheels (60L, 60R, 66L, 66R; 220VI, 220VR; 220HL, 220HR) of the tested axle 12, 1400, 202 are zeroed,
d) to subsequently rotate the wheel (60L, 60R, 66L, 66R; 220VI, 220VR; 220HL, 220HR) or the wheels at one side of the axle in the opposite direction until the threshold value is again exceeded in the other direction,
e) to determine the angular positions of the wheels (60L, 60R, 66L, 66R; 220VI, 220VR; 220HL, 220HR) at both sides of the axle when the threshold value is reached in the other direction,
f) determines the angular difference between the angular positions determined in step e) that corresponds to the tooth backlash or the axle backlash, and
g) to control the rotational speed of the wheels via the devices driven by the motor (92L, 92R) such that the angular difference determined during the brake test does not exceed the tooth backlash.

5. A brake testing device in accordance with any one of the preceding claims,
**characterized in that**
each sensor device (262L, 262R) is a single-chip sensor with an integrated processor (µC).

6. A brake testing device in accordance with any one of the preceding claims,
**characterized in that**
each sensor device (262L, 262R) is a sensor device of the type BNO080 or BNO085 from the company Hillcrest Laboratories Inc.

7. A brake testing device in accordance with any one of the preceding claims,
**characterized in that**
each sensor device (262L, 262R) is designed with a device for its attachment to a wheel (60L, 60R, 66L, 66R; 220VI, 220VR; 220HL, 220HR) or to a wheel bolt or to a wheel nut or a wheel hub or in a wheel opening.

8. A brake testing device in accordance with claim 7,
**characterized in that**
the attachment device comprises a magnet or an electromagnet.

9. A brake testing device in accordance with claim 7,
**characterized in that**
the attachment device is adapted to be attached to the wheel (60L, 60R, 66L, 66R; 220VI, 220VR; 220HL, 220HR) by means of a suction force, an adhesive force or by a mechanical closure, for example by an elastic strap having a buckle or a hook-and-loop fastener or by a reusable cable tie.

10. A brake testing device in accordance with any one of the preceding claims,
**characterized in that**
it is used for vehicles which have two driven axles (200, 202) arranged behind one another and in which the brakes of the wheels (220VI, 220VR) of the one axle (200) can be tested separately from the brakes of the wheels (220HL, 220HR) of the other axle (202), and the one axle (200) can be driven directly or indirectly by a vehicle engine and has an output (226) which is coupled directly or indirectly to a differential (230) of the other axle (202).

11. A brake testing device in accordance with claim 10,
**characterized in that**
the vehicle is a military vehicle or a construction vehicle or mining vehicle.

12. A method of testing the wheel brakes of an axle (12, 14; 200, 202) of a vehicle (10) using the brake testing device in accordance with at least one of the preceding claims having at least the following features:
(a) attaching a respective sensor device (262L, 262R) to a wheel (60L, 60R, 66L, 66R; 220VI, 220VR; 220HL, 220HR) at each side of the tested axle (12, 14; 200, 202) in any desired orientation that generates signals from which a rotary angle vector of the wheel (60L, 60R, 66L, 66R; 220VI, 220VR; 220HL, 220HR) about an at least substantially horizontal axis is generated,
b) the Cardan shaft (28, 30; 208; 226) is fixedly held, for example, either by a lock in the drive train or by a ground contact of the wheels of another axle of the vehicle which is coupled to the tested axle at least substantially without slip,
(c) driving the wheel (60L, 60R, 66L, 66R; 220VI, 220VR; 220HL, 220HR) or the wheels at one side of the tested axle in one rotational direction by means of a device (80L, 82L, 80R, 82R) driven by a motor (92L, 82R), d) controlling the rotational speed of the one device (80L, 82L; 80R, 82R) so that the wheel (60L, 60R, 66L, 66R; 220VI, 220VR; 220HL, 220HR) or the wheels at the corresponding side of the tested axle (12, 14; 20, 202) rotates or rotate at a predefined rotational speed,
e) rotating the wheel (60L, 60R, 66L, 66R; 220VI, 220VR; 220HL, 220HR) or the wheels at the other side of the tested axle in the opposite rotational direction by means of the corresponding further device driven by the motor (92L, 92R),
f) controlling the rotational speed of one of the motors (92L, 92R) to ensure that the rotary angle difference between the wheels (60L, 60R, 66L, 66R; 220VI, 220VR; 220HL, 220HR) at both sides of the tested axle is less than the tooth backlash or the axle backlash,
(g) performing a brake test on at least the forward-rotating wheel (60L, 60R, 66L, 66R; 220VI, 220VR; 220HL, 220HR) or wheels.

13. A brake testing device in accordance with claim 12,
**characterized in that**
sensor devices (262) are selected which are each present as semiconductor components which generate at least three acceleration signals in three coordinates standing at right angles to one another and three gyroscopic signals in three coordinates likewise standing at right angles to one another and, if applicable, three magnetometer signals in three coordinates standing at right angles to one another, and at least one signal processor (µC; 244; 256) is provided which determines, from at least some of the signals, the respective rotary angle signal for the corresponding wheel (60L, 60R, 66L, 66R; 220VI, 220VR; 220HL, 220HR) about the at least substantially horizontal axis.

14. A method in accordance with claim 12 or 13,
**characterized in that**,
for each revolution of the respective wheel (60L, 60R, 66L, 66R; 220VI, 220VR; 220HL, 220HR), a processor (µC; 244; 256) associated with the respective sensor 262L, 262R) manipulates the rotary angle vectors of the respective wheel (60L, 60R, 66L, 66R; 220VI, 220VR; 220HL, 220HR) during a test such that they form a cumulative rotary angle value instead of displaying a rotary angle vector which alternately points forward and backward.

15. A method in accordance with any one of the preceding claims 12 to 14,
**characterized in that**
a control device (244) is provided which is programmed to perform at least the following functions at the beginning of a brake test:
a) to put the device (80L, 82L; 80R, 82R), driven by the motor (92L, 92R), for the wheel (60L, 60R, 66L, 66R; 220VI, 220VR; 220HL, 220HR) or the wheels at the one side of the axle (12, 14; 200, 202) into motion in one rotational direction and to monitor the rotary angle position of this wheel (60L, 60R, 66L, 66R; 220VI, 220VR; 220HL, 220HR) or these wheels by means of the respective sensor device,
b) to check the rotary angle position of the wheel (60L, 60R, 66L, 66R; 220VI, 220VR; 220HL, 220HR) or the wheels at the other side of the axle (12, 14; 200, 202), which wheel or wheels attempts or attempt to rotate in the opposite rotational direction due to the differential (36, 36H; 204, 230) and the immobilization of the Cardan shaft (28, 30; 208, 226), by means of the sensor device (262L, 262R) provided at that side of the axle (12, 14; 200, 202), wherein, after a rotational movement of a few degrees, the drive of the tested axle certainly contacts one side of the toothed arrangement and the braking value of the wheel or wheels (60L, 60R, 66L, 66R; 220VI, 220VR; 220HL, 220HR) rotating in the opposite rotational direction reaches a previously defined threshold value,
c) when this threshold value is reached, the current angular positions of the wheels (60L, 60R, 66L, 66R; 220VI, 220VR; 220HL, 220HR) of the tested axle (12, 14; 200, 202) are zeroed,
d) to subsequently rotate the wheel (60L, 60R, 66L, 66R; 220VI, 220VR; 220HL, 220HR) or the wheels at one side of the axle in the opposite direction until the threshold value is again exceeded in the other direction,
e) to determine the angular positions of the wheels (60L, 60R, 66L, 66R; 220VI, 220VR; 220HL, 220HR) at both sides of the axle (12, 14; 200, 202) when the threshold value is reached in the other direction,
f) determines the angular difference between the angular positions determined in step e) that corresponds to the tooth backlash or the axle backlash, and
g) to control the rotational speed of the wheels (60L, 60R, 66L, 66R; 220VI, 220VR; 220HL, 220HR) via the devices (80L, 82L; 80R, 82R) driven by the motor (92L, 92R) such that the angular difference determined during the brake test does not exceed the tooth backlash.

## Revendications

1. Dispositif de contrôle des freins pour un véhicule (10) comprenant au moins un essieu (12, 14 ; 200, 202) susceptible d'être entraîné, muni d'un différentiel (36, 36H ; 204, 230) et d'un entraînement (28, 30 ; 208, 226) pour le différentiel, dans lequel l'entraînement peut être retenu solidairement en rotation pendant le contrôle des freins, la roue (60L, 60R, 66L, 66R ; 220VI, 220VR ; 220HL, 220HR) ou les roues située(s) d'un côté de l'essieu contrôlé (12, 14 ; 200, 202) peut ou peuvent être entraînée(s) dans un sens de rotation vers l'avant par au moins un dispositif susceptible d'être entraîné par un moteur (92L, 92R), de préférence par une paire de rouleaux (80L, 82L, 80R, 82R), tandis que l'autre roue (60L, 60R, 66L, 66R ; 220VI, 220VR ; 220HL, 220HR) ou les roues située(s) de l'autre côté de l'essieu contrôlé peut ou peuvent être entraînée(s) dans l'autre sens de rotation par au moins un autre dispositif susceptible d'être entraîné par un moteur (92L, 92R), de préférence par une paire de rouleaux,
**caractérisé en ce que**
il comporte, pour les deux côtés de l'essieu contrôlé (12, 14 ; 200, 202), un dispositif de détection respectif (262L, 262R) qui peut être monté sur la roue respective (60L, 60R, 66L, 66R ; 220VI, 220VR ; 220HL, 220HR) dans une orientation quelconque et qui produit des signaux de rotation de la roue par rapport à un axe au moins sensiblement horizontal,
**en ce qu'**il est prévu au moins un processeur de signaux (µC, 244 ; 256) qui forme des vecteurs d'angle de rotation à partir des signaux de rotation des dispositifs de détection et une valeur différentielle à partir des vecteurs d'angle de rotation, et
**en ce que** la valeur différentielle ou une valeur proportionnelle à celle-ci peut être appliquée à une commande (244) associée au dispositif de contrôle des freins, qui commande la vitesse de rotation d'un des dispositifs (80L, 82L ; 80R, 82R), susceptibles d'être entraînés par le moteur (92L, 92R), de telle sorte que la différence d'angle de rotation des roues (60L, 60R, 66L, 66R ; 220VI, 220VR ; 220HL, 220HR) des deux côtés de l'essieu contrôlé pendant un contrôle des freins est au moins sensiblement au maximum égale au jeu d'engrènement de l'essieu contrôlé.

2. Dispositif de contrôle des freins selon la revendication 1,
**caractérisé en ce que**
il est prévu au moins un processeur (µC ; 244 ; 256) associé aux dispositifs de détection (262L, 262R), qui manipule les vecteurs d'angle de rotation de la roue respective (60L, 60R, 66L, 66R ; 220VI, 220VR ; 220HL, 220HR) pendant un contrôle de telle sorte qu'ils forment une valeur d'angle de rotation cumulative susceptible d'être affectée au calcul de la différence, au lieu de délivrer des angles de rotation avec des signes plus et moins alternés.

3. Dispositif de contrôle des freins selon la revendication 1,
**caractérisé en ce que**
les dispositifs de détection (262L, 262R) se présentent chacun sous forme de composants semi-conducteurs et sont choisis dans le groupe des dispositifs de détection suivants : un capteur d'angle de rotation, par exemple un capteur d'accélération, un capteur gyroscopique, un capteur magnétique différentiel à effet Hall ou un capteur inductif de mesure d'angle, une combinaison d'un capteur gyroscopique avec un capteur d'accélération, une combinaison de plusieurs capteurs gyroscopiques avec un ou plusieurs capteurs d'accélération, une combinaison d'un capteur gyroscopique avec plusieurs capteurs d'accélération, une combinaison de trois capteurs d'accélération dans trois directions de coordonnées perpendiculaires entre elles et de trois capteurs gyroscopiques dans trois directions de coordonnées également perpendiculaires entre elles et une combinaison de trois capteurs d'accélération dans trois directions de coordonnées perpendiculaires entre elles et de trois capteurs gyroscopiques dans trois directions de coordonnées également perpendiculaires entre elles, ainsi que trois capteurs magnétométriques qui génèrent des signaux magnétométriques dans trois coordonnées perpendiculaires entre elles, et
**en ce qu'**il est prévu au moins un processeur de signaux (µC ; 244 ; 256) qui, à partir d'au moins quelques-uns des signaux, détermine le signal d'angle de rotation respectif ou un signal d'angle de rotation cumulé pour la roue correspondante (60L, 60R, 66L, 66R ; 220VI, 220VR ; 220HL, 220HR) autour de l'axe au moins essentiellement horizontal.

4. Dispositif de contrôle des freins selon l'une des revendications précédentes,
**caractérisé en ce que**
il est prévu un dispositif de commande (244) qui est programmé pour exécuter au moins les fonctions suivantes au début d'un contrôle des freins :
a) mettre en marche dans un sens de rotation le dispositif (80L, 82L ; 80R, 82R), entraîné par le moteur (92L, 92R), pour la roue (60L, 60R, 66L, 66R ; 220VI, 220VR ; 220HL, 220HR) ou les roues située(s) d'un côté de l'essieu (12, 14 ; 200, 202), et surveiller la position angulaire de rotation de cette roue (60L, 60R, 66L, 66R ; 220VI, 220VR ; 220HL, 220HR) ou de ces roues à l'aide du dispositif de détection respectif (262L, 262R),
b) contrôler la position angulaire de rotation de la roue (60L, 60R, 66L, 66R ; 220VI, 220VR ; 220HL, 220HR) ou des roues située(s) de l'autre côté de l'essieu (12, 14 ; 200, 202), qui, en raison du différentiel (36, 36H ; 204, 230) et de l'immobilisation de l'arbre à cardan (28, 30 ; 208, 226), tente(nt) de tourner dans le sens de rotation opposé, à l'aide du dispositif de détection (262L, 262R) prévu de ce côté de l'essieu, sachant qu'après un mouvement de rotation de quelques degrés, l'entraînement de l'essieu contrôlé s'applique avec certitude contre un côté de la denture et que la valeur de freinage de la roue (60L, 60R, 66L, 66R ; 220VI, 220VR ; 220HL, 220HR) ou des roues tournant dans le sens de rotation opposé atteint une valeur seuil prédéterminée,
c) une fois que cette valeur seuil est atteinte, mettre à zéro les positions angulaires instantanées des roues (60L, 60R, 66L, 66R ; 220VI, 220VR ; 220HL, 220HR) de l'essieu contrôlé (12, 1400, 202),
d) puis, faire tourner la roue (60L, 60R, 66L, 66R ; 220VI, 220VR ; 220HL, 220HR) ou les roues située(s) d'un côté de l'essieu dans le sens opposé, jusqu'à ce que la valeur seuil soit à nouveau dépassée dans l'autre sens,
e) déterminer les positions angulaires des roues (60L, 60R, 66L, 66R ; 220VI, 220VR ; 220HL, 220HR) des deux côtés de l'essieu lorsque la valeur seuil est atteinte dans l'autre sens,
f) déterminer la différence angulaire entre les positions angulaires déterminées à l'étape e), qui correspond au jeu d'engrènement ou au jeu d'essieu, et
g) commander la vitesse de rotation des roues par l'intermédiaire des dispositifs entraînés par le moteur (92L, 92R) de telle sorte que la différence angulaire déterminée pendant le contrôle des freins ne dépasse pas le jeu d'engrènement.

5. Dispositif de contrôle des freins selon l'une des revendications précédentes,
**caractérisé en ce que**
chaque dispositif de détection (262L, 262R) est un capteur mono-puce avec processeur intégré (µC).

6. Dispositif de contrôle des freins selon l'une des revendications précédentes,
**caractérisé en ce que**
chaque dispositif de détection (262L, 262R) est un dispositif de détection du type BNO080 ou BNO085 de la société Hillcrest Laboratories Inc.

7. Dispositif de contrôle des freins selon l'une des revendications précédentes,
**caractérisé en ce que**
chaque dispositif de détection (262L, 262R) est conçu avec un dispositif pour le fixer à une roue (60L, 60R, 66L, 66R ; 220VI, 220VR ; 220HL, 220HR) ou à un boulon de roue ou à un écrou de roue ou à un moyeu de roue ou dans une ouverture de roue.

8. Dispositif de contrôle des freins selon la revendication 7,
**caractérisé en ce que**
le dispositif de fixation comprend un aimant ou un électro-aimant.

9. Dispositif de contrôle des freins selon la revendication 7,
**caractérisé en ce que**
le dispositif de fixation est conçu pour être fixé à la roue (60L, 60R, 66L, 66R ; 220VI, 220VR ; 220HL, 220HR) par aspiration, par collage ou par une fermeture mécanique, par exemple par une sangle élastique avec boucle ou velcro ou par un serre-câble réutilisable.

10. Dispositif de contrôle des freins selon l'une des revendications précédentes,
**caractérisé en ce que**
il est destiné à des véhicules comportant deux essieux entraînés (200, 202) disposés l'un derrière l'autre, dans lesquels les freins des roues (220VI, 220VR) d'un essieu (200) peuvent être contrôlés séparément des freins des roues (220HL, 220HR) de l'autre essieu (202), et l'un des essieux (200) peut être entraîné directement ou indirectement par le moteur d'un véhicule et comporte une sortie (226) qui est couplée directement ou indirectement à un différentiel (230) de l'autre essieu (202).

11. Dispositif de contrôle des freins selon la revendication 10,
**caractérisé en ce que**
le véhicule est un véhicule militaire ou un véhicule de chantier ou de mine.

12. Procédé de contrôle des freins de roue d'un essieu (12, 14 ; 200, 202) d'un véhicule (10) avec le dispositif de contrôle des freins selon l'une au moins des revendications précédentes, présentant au moins les étapes suivantes consistant à :
a) fixer un dispositif de détection respectif (262L, 262R) sur une roue (60L, 60R, 66L, 66R ; 220VI, 220VR ; 220HL, 220HR) de chaque côté de l'essieu contrôlé (12, 14 ; 200, 202) dans une orientation quelconque, qui génère des signaux à partir desquels un vecteur d'angle de rotation de la roue (60L, 60R, 66L, 66R ; 220VI, 220VR ; 220HL, 220HR) autour d'un axe au moins sensiblement horizontal est généré,
b) retenir l'arbre à cardan (28, 30 ; 2β8 ; 226), par exemple soit par un dispositif de blocage dans la chaîne cinématique, soit par contact au sol des roues d'un autre essieu du véhicule qui est couplé à l'essieu contrôlé au moins sensiblement sans glissement,
c) entraîner la roue (60L, 60R, 66L, 66R ; 220VI, 220VR ; 220HL, 220HR) ou les roues située(s) d'un côté de l'essieu contrôlé dans un sens de rotation au moyen d'un dispositif (80L, 82L, 80R, 82R) entraîné par un moteur (92L, 82R),
d) commander la vitesse de rotation de l'un des dispositifs (80L, 82L ; 80R, 82R) pour faire tourner la roue (60L, 60R, 66L, 66R ; 220VI, 220VR ; 220HL, 220HR) ou les roues située(s) du côté correspondant de l'essieu contrôlé (12, 14 ; 20, 202) à une vitesse de rotation prédéterminée,
e) faire tourner la roue (60L, 60R, 66L, 66R ; 220VI, 220VR ; 220HL, 220HR) ou les roues située(s) de l'autre côté de l'essieu contrôlé dans le sens de rotation opposé au moyen de l'autre dispositif correspondant entraîné par le moteur (92L, 92R),
f) commander la vitesse de rotation de l'un des moteurs (92L, 92R) pour s'assurer que la différence d'angle de rotation entre les roues (60L, 60R, 66L, 66R ; 220VI, 220VR ; 220HL, 220HR) située(s) des deux côtés de l'essieu contrôlé soit inférieure au jeu d'engrènement ou au jeu d'essieu,
g) effectuer un contrôle des freins sur au moins la roue (60L, 60R, 66L, 66R ; 220VI, 220VR ; 220HL, 220HR) ou les roues tournant vers l'avant.

13. Procédé selon la revendication 12,
**caractérisé en ce que**
on choisit des dispositifs de détection (262) qui se présentent chacun sous la forme de composants à semi-conducteurs qui génèrent au moins trois signaux d'accélération dans trois coordonnées perpendiculaires entre elles et trois signaux gyroscopiques dans trois coordonnées également perpendiculaires entre elles et, le cas échéant, trois signaux magnétométriques dans trois coordonnées perpendiculaires entre elles, et on prévoit au moins un processeur de signaux (µC ; 244 ; 256) qui, à partir d'au moins quelques-uns des signaux, détermine le signal d'angle de rotation respectif pour la roue correspondante (60L, 60R, 66L, 66R ; 220VI, 220VR ; 220HL, 220HR) autour de l'axe au moins essentiellement horizontal.

14. Dispositif de contrôle des freins selon la revendication 12 ou 13,
**caractérisé en ce que**
pour chaque tour de la roue respective (60L, 60R, 66L, 66R ; 220VI, 220VR ; 220HL, 220HR), un processeur (µC ; 244 ; 256) associé au capteur respectif (262L, 262R) manipule les vecteurs d'angle de rotation de la roue respective (60L, 60R, 66L, 66R ; 220VI, 220VR ; 220HL, 220HR) pendant un contrôle de telle sorte qu'ils forment une valeur d'angle de rotation cumulative, au lieu d'afficher un vecteur d'angle de rotation qui pointe alternativement vers l'avant et vers l'arrière.

15. Procédé selon l'une des revendications précédentes 12 à 14,
**caractérisé en ce que**
il est prévu un dispositif de commande (244) qui est programmé pour exécuter au moins les fonctions suivantes au début d'un contrôle des freins :
a) mettre en marche dans un sens de rotation le dispositif (80L, 82L ; 80R, 82R), entraîné par le moteur (92L, 92R), pour la roue (60L, 60R, 66L, 66R ; 220VI, 220VR ; 220HL, 220HR) ou les roues située(s) d'un côté de l'essieu (12, 14 ; 200, 202), et surveiller la position angulaire de rotation de cette roue (60L, 60R, 66L, 66R ; 220VI, 220VR ; 220HL, 220HR) ou de ces roues à l'aide du dispositif de détection respectif,
b)
b) contrôler la position angulaire de rotation de la roue (60L, 60R, 66L, 66R ; 220VI, 220VR ; 220HL, 220HR) ou des roues située(s) de l'autre côté de l'essieu (12, 14 ; 200, 202), qui, en raison du différentiel (36, 36H ; 204, 230) et de l'immobilisation de l'arbre à cardan (28, 30 ; 208, 226), tente(nt) de tourner dans le sens de rotation opposé, à l'aide du dispositif de détection (262L, 262R) prévu de ce côté de l'essieu (12, 14 ; 200, 202), sachant qu'après un mouvement de rotation de quelques degrés, l'entraînement de l'essieu contrôlé s'applique avec certitude contre un côté de la denture et que la valeur de freinage de la roue (60L, 60R, 66L, 66R ; 220VI, 220VR ; 220HL, 220HR) ou des roues tournant dans le sens de rotation opposé atteint une valeur seuil prédéterminée,
c) une fois que cette valeur seuil est atteinte, mettre à zéro les positions angulaires instantanées des roues (60L, 60R, 66L, 66R ; 220VI, 220VR ; 220HL, 220HR) de l'essieu contrôlé (12, 14 ; 1400, 202),
d) puis faire tourner la roue (60L, 60R, 66L, 66R ; 220VI, 220VR ; 220HL, 220HR) ou les roues située(s) d'un côté de l'essieu (12, 14 ; 200, 202) dans le sens opposé, jusqu'à ce que la valeur seuil soit à nouveau dépassée dans l'autre sens,
e) déterminer les positions angulaires des roues (60L, 60R, 66L, 66R ; 220VI, 220VR ; 220HL, 220HR) des deux côtés de l'essieu (12, 14 ; 200, 202) lorsque la valeur seuil est atteinte dans l'autre sens,
f) déterminer la différence angulaire entre les positions angulaires déterminées à l'étape e), qui correspond au jeu d'engrènement ou au jeu d'essieu, et
g) commander la vitesse de rotation des roues (60L, 60R, 66L, 66R ; 220VI, 220VR ; 220HL, 220HR) par l'intermédiaire des dispositifs (80L, 82L ; 80R, 82R) entraînés par le moteur (92L, 92R) de telle sorte que la différence angulaire déterminée pendant le contrôle des freins ne dépasse pas le jeu d'engrènement.
